# EUROPÄISCHE PATENTSCHRIFT

(11) **EP 3 433 113 B1**
(45) Veröffentlichungstag und Bekanntmachung des Hinweises auf die Patenterteilung: **21.04.2021**
(21) Anmeldenummer: 17712470.8
(22) Anmeldetag: 21.03.2017
(51) Int. Cl.: B60D 1/24, B60D 1/62, B60D 1/06

(54) **TRAGELEMENT MIT EINEM SENSOR**
SUPPORTING ELEMENT COMPRISING A SENSOR
ELÉMENT SUPPORT DOTÉ D'UN CAPTEUR

(30) Priorität: 23.03.2016 DE 102016105509; 24.03.2016 DE 102016105604; 07.06.2016 DE 102016110460
(43) Veröffentlichungstag der Anmeldung: 30.01.2019
(73) Patentinhaber: WESTFALIA - Automotive GmbH, 33378 Rheda-Wiedenbrück (DE)
(72) Erfinder: SIELHORST, Bernhard, 33378 Rheda-Wiedenbrück (DE); LÖTTER, Hendrik, 49328 Melle (DE)
(74) Vertreter: Patentanwälte Bregenzer und Reule Partnerschaftsgesellschaft mbB
(86) Internationale Anmeldenummer: PCT/EP2017/056635
(87) Internationale Veröffentlichungsnummer: WO 2017/162634

(56) Entgegenhaltungen:
- EP-A1- 2 567 837
- WO-A1-2016/087464

## Beschreibung

Die Erfindung betrifft ein Tragelement als Bestandteil einer Kraftfahrzeug-Anhängekupplung oder eines zum Anhängen an eine Kraftfahrzeug-Anhängekupplung vorgesehenen Anhängers oder eines Lastenträgers, wobei das Tragelement mindestens einen Sensor zur Erfassung einer Verformung des Tragelements durch eine an dem Tragelement angreifende Last aufweist, wobei an dem Tragelement mindestens eine Aussparung für den mindestens einen Sensor im Bereich eines sich bei der Belastung durch die Last verformenden Stützabschnitts des Tragelements vorgesehen ist, wobei der mindestens eine Sensor zur Messung eines Abstands von Referenzflächen der mindestens einen Aussparung vorgesehen ist.

In der nicht vorveröffentlichten internationalen Patentanmeldung WO 2016/087464 A1 oder auch in DE 10 2014 013 812 A1 ist erläutert einen Sensor in einer Vertiefung am Kupplungsarm anzuordnen. Der in DE 10 2014 013 812 A1 erläuterte Sensor ist beispielsweise mit Flächen der Vertiefung verklebt usw.

In DE 10 2014 013 812.7 ist erläutert, einen Sensor in einer Vertiefung am Kupplungsarm anzuordnen. Der Sensor ist beispielsweise mit Flächen der Vertiefung verklebt oder verschraubt, die sich bei der Belastung durch die an der Anhängekupplung angreifenden Last verformen. Es ist ein Sensor mit zwei Sensorteilen erläutert, deren Abstand sich bei der Belastung und somit Verformung des Tragelements in Gestalt des Kupplungsarms verändert. Durch die Verformung des Tragelements werden die Sensorelemente mechanisch belastet. Das Dokument EP 2 567 837 A1 offenbart ein Tragelement gemäß dem Oberbegriff des Anspruchs 1.

Es ist daher die Aufgabe der Erfindung, ein verbessertes Tragelement als Bestandteil einer Kraftfahrzeug-Anhängekupplung oder eines zum Anhängen an eine Kraftfahrzeug-Anhängekupplung vorgesehenen Anhängers oder eines Lastenträgers mit einem Sensor zur Erfassung einer Verformung des Tragelements durch eine an dem Tragelement angreifende Last bereitzustellen.

Zur Lösung der Aufgabe ist bei einem Tragelement der eingangs genannten Art vorgesehen, dass das Tragelement als ein Profilkörper mit mindestens zwei zueinander winkeligen oder über einen Bogenabschnitt miteinander verbundenen Tragwänden, die einen Zwischenraum oder Hohlraum einschließen, ausgestaltet ist, wobei mindestens eine der Referenzflächen an einer Durchtrittsöffnung des Profilkörpers oder an einem vor den Profilkörper vorstehenden Indikatorelement vorgesehen ist und sich die Referenzflächen bei der Verformung des Tragelements relativ zueinander, insbesondere aufeinander zu oder voneinander weg, bewegen.

Der Profilkörper hat mindestens zwei, vorzugsweise mehrere Tragwände, die zueinander winkelig sind oder beispielsweise über einen Bogenabschnitt verlaufen, so dass er eine besonders hohe Stabilität aufweist. Es ist ein Grundgedanke der vorliegenden Erfindung, dass der Profilkörper bei Belastung eine Verformung erfährt, die durch den Sensor erfassbar ist.

Die Durchtrittsöffnung ist beispielsweise an einer der Tragwände angeordnet.

Das mindestens eine Indikatorelement ist beispielsweise mit der Tragwand einstückig oder mit der Tragwand verbunden.

Bevorzugt ist das mindestens eine Indikatorelement Stanzteil oder Stanz-Biegeteil, das aus einem Wandkörper der jeweiligen Tragwand herausgestanzt und optional noch einer Biegeverformung unterzogen worden ist.

Eine Referenzfläche kann eine Referenzfläche sein, die einen Spalt der Aussparung unmittelbar begrenzt. Es kann sich bei der Referenzfläche auch um eine solche Referenzfläche handeln, die neben der Aussparung oder bei der Aussparung vorhanden ist, jedoch eine Bewegung im Bereich der Aussparung indiziert oder mitmacht.

Es ist möglich, dass beide Referenzflächen an derselben Tragwand angeordnet sind, beispielsweise an einer Aussparung oder Durchtrittsöffnung der Tragwand und/oder an einem mit der Tragwand verbundenen, insbesondere einstückigen Indikatorelement.

Es ist auch möglich, dass eine Referenzfläche an einer ersten Tragwand und die andere Referenzfläche an einer zweiten Tragwand des Profilkörpers angeordnet sind. Die Tragwände können beispielsweise unmittelbar aneinander angrenzen und miteinander verbunden sein oder über einen Bogenabschnitt miteinander verbunden sein, sozusagen winkelig zueinander sein. Es ist weiterhin möglich, dass die erste Tragwand und die zweite Tragwand beispielsweise parallel zueinander verlaufen, d.h. dass sie beispielsweise eine obere und untere oder eine vordere und hintere Tragwand des Profilkörpers darstellen. Vor die Tragwände kann beispielsweise ein entsprechendes Indikatorelement vorstehen.

Der Profilkörper kann vielfältig eingesetzt sein, beispielsweise als Tragelement einer Anhängekupplung, zum Beispiel als ein Querträger, der hinten an der Karosserie des Kraftfahrzeugs zu befestigen ist, und/oder als ein Seitenträger oder Längsträger oder Längs-Befestigungsprofil, welches in Fahrzeuglängsrichtung an dem Kraftfahrzeug orientiert ist. Längsträger oder Seitenträger können beispielsweise von einem Querträger abstehen und zur Verbindung mit Längsträgern der Karosserie des Kraftfahrzeugs vorgesehen sein. Weiterhin ist es möglich, dass der Profilkörper einen Bestandteil eines Kupplungsarms der Anhängekupplung bildet. Am freien Endbereich des Kupplungsarms ist zweckmäßigerweise ein Kuppelelement, beispielsweise eine Kupplungskugel, angeordnet.

Es ist aber auch möglich, dass der Profilkörper keinen Kupplungsarm einer Anhängekupplung bildet und/oder nicht an einem Kupplungsarm der Anhängekupplung angeordnet ist.

Besonders bevorzugt bildet der Profilkörper einen Bestandteil einer zur Befestigung am Kraftfahrzeug vorgesehenen oder am Kraftfahrzeug befestigten Trägeranordnung, an dem ein Kupplungsarm einer Anhängekupplung fest oder lösbar oder beweglich, insbesondere schwenkbeweglich, zwischen einer für den Gebrauch der Anhängekupplung, beispielsweise zum Anhängen eines Anhängers oder Befestigen eines Lastenträgers, vorgesehenen Gebrauchsstellung und einer insbesondere zum Kraftfahrzeug hin verstellten, vorteilhaft hinter und/oder unter einem Stoßfänger des Kraftfahrzeugs verborgenen Nichtgebrauchsstellung angeordnet oder anordenbar ist. Der lösbare Kupplungsarm ist beispielsweise in eine Steckaufnahme einsteckbar, die an der Trägeranordnung angeordnet ist.

Es ist auch möglich, dass das Tragelement oder der Profilkörper einen Bestandteil eines Anhängers bildet, insbesondere dessen Fahrgestells. Beispielsweise kann der Profilkörper oder das Tragelement an einer Deichsel des Anhängers angeordnet sein.

Ohne weiteres ist es möglich, dass das Tragelement einen Bestandteil eines Lastenträgers bildet, beispielweise eines Fahrradträgers oder eines sonstigen Trägers, der an einer Anhängekupplung eines Kraftfahrzeugs lösbar montierbar ist. Der Lastenträger ist vorzugsweise ein Heck-Lastenträger zur Anordnung an einem Heck des Kraftfahrzeugs. Weiterhin kann der Lastenträger in der Art einer Schublade an dem Kraftfahrzeug verstellbar gelagert sein, beispielsweise aus einer Aufnahme am Heck des Kraftfahrzeugs ausziehbar und in diese wieder einschiebbar. Der Lastenträger kann aber auch einen Dach-Lastenträger zur Befestigung an einem Dach des Kraftfahrzeugs oder ein Heckklappenträger zur Befestigung an einer Heckklappe, insbesondere einer Gepäckraumklappe, des Kraftfahrzeugs, sein. Bevorzugt ist das Tragelement ein Bestandteil eines Tragegestells des Lastenträgers. Das Tragelement kann aber auch an einer Lastenträgerkupplung des Lastenträgers angeordnet sein oder einen Bestandteil einer Lastenträgerkupplung bilden. Das Trageelement kann beispielsweise ein Bestandteil eines Kupplungsgehäuses der Lastenträgerkupplung sein oder ein Kupplungsgehäuse bilden. Die Lastenträgerkupplung dient vorzugsweise dazu, den Lastenträger lösbar mit einem Kuppelelement des Kraftfahrzeugs zu verbinden, beispielsweise mit einer Kupplungskugel.

Es ist möglich, dass der Profilkörper bzw. das Tragelement ausschließlich ein Bestandteil eines Anhängers oder eines Lastenträgers ist. Insbesondere ist es möglich, das Tragelement gerade nicht bei Kraftfahrzeug-Anhängekupplungen zu verwenden, sondern ausschließlich im Zusammenhang mit Anhängern oder Lastenträgern.

Es ist möglich, dass eine oder beide der Referenzflächen an der Durchtrittsöffnung des Profilkörpers vorgesehen sind. Die Durchtrittsöffnung ist sozusagen eine gezielte Schwächung der Tragwand, weshalb dort eine Verformung des Tragelements besonders günstig erfassbar ist.

Weiterhin ist aber auch die Anordnung einer oder beider Referenzflächen an einem Vorsprung, insbesondere an einem zungenartigen Vorsprung oder Indikatorelement vorteilhaft. Der Vorsprung oder das Indikatorelement verstärkt sozusagen die Relativbewegung, die am Fußpunkt des Vorsprungs oder Indikatorelements auftritt, so dass die Referenzfläche, die an einem vom Fußpunkt des Indikatorelements entfernten Bereich vorzugweise vorgesehen ist, eine besonders weite Bewegung durchläuft.

Eine Zusammenwirkung einer Referenzfläche an der Durchtrittsöffnung mit einer Referenzfläche an einem Indikatorelement ist ohne weiteres möglich.

Der Profilkörper kann unterschiedliche geometrische Ausgestaltungen, insbesondere Querschnittsausgestaltungen haben. So ist es vorteilhaft, wenn die Tragwände zueinander rechtwinkelig sind. Dies ist beispielweise möglich, wenn der Profilkörper einen L-förmigen oder T-förmigen oder U-förmigen Querschnitt aufweist. Besonders bevorzugt ist beispielsweise ein quadratischer oder rechteckiger Querschnitt des Profilkörpers. Weiterhin ist es möglich, dass der Profilkörper Rundungen aufweist oder als ein Rundprofil ausgestaltet ist.

Der Profilkörper kann ein seitlich offenes Profil sein, zum Beispiel ein U-förmiges Profil oder ein L-förmiges Profil oder ein T-förmiges Profil.

Es ist aber auch möglich, dass der Profilkörper ein geschlossenes Profil ist, welches einen Hohlraum aufweist. Das geschlossene Profil kann beispielsweise ein Rundprofil sein. Aber auch polygonale, beispielsweise quadratische oder rechteckige, Querschnitte des Profils sind ohne weiteres möglich.

Die Tragwände haben bevorzugt etwa dieselbe Stärke oder Dicke, beispielsweise zwischen 0,5 mm und 5 mm, besonders bevorzugt zwischen 1 mm und 3 mm.

Bevorzugt ist eine Stärke oder Dicke der Tragwände über ihre gesamte Querschnittserstreckung zur benachbarten Tragwand gleich oder im Wesentlichen gleich.

Ferner ist es vorteilhaft, wenn auch ein benachbarte Tragwände verbindender Bogenabschnitt, der zum Beispiel eine Seitenkante des Profilkörpers ausbildet, eine derartige gleiche Dicke oder gleiche Stärke wie mindestens eine an den Bogenabschnitt unmittelbar angrenzende Tragwand aufweist.

Die Tragwände sind vorzugsweise Planwände oder plattenartig.

Bevorzugt ist es, wenn die Referenzflächen neben dem Stützabschnitt des Tragelements angeordnet sind. Vorzugsweise haben die Referenzflächen einen Abstand zu dem Stützabschnitt, beispielsweise einen Querabstand und/oder einen Längsabstand in Bezug auf die Kraftflussrichtung durch den Stützabschnitt und/oder in Bezug auf eine Oberfläche oder Seitenfläche des Stützabschnitts. Der Querabstand und/oder Längsabstand beträgt beispielsweise maximal 5 cm, bevorzugt maximal 4 cm, insbesondere weniger als 3 cm oder 2cm. Ein besonders günstiger Querabstand und/oder Längsabstand in einem Bereich von 2-5 mm.

Die Referenzflächen erstrecken sich vorzugsweise quer, insbesondere rechtwinkelig oder etwa rechtwinkelig, zu einem sich bei der Belastung durch die Last verformenden Stützabschnitt des Tragelements.

Vorzugsweise ist vorgesehen, dass die Referenzflächen quer zu einer Kraftflussrichtung durch den Stützabschnitt des Tragelements verlaufen.

Die Referenzflächen sind vorteilhaft von einem Kraftfluss durch den Stützabschnitt des Tragelements frei, der von dem Stützabschnitt bei der Belastung durch die an dem Tragelement angreifende Last übertragen wird. Insbesondere im diesem Fall ist es ohne weiteres möglich, dass die Referenzflächen nicht quer zu dem sich bei Last verformenden Stützabschnitt des Tragelements verlaufen, sondern insgesamt oder zumindest abschnittsweise längs und/oder parallel dazu verlaufen.

Der in der mindestens einen Aussparung oder neben der mindestens einen Aussparung angeordnete und/oder messende Sensor ist zweckmäßigerweise vor Umwelteinflüssen geschützt. Insbesondere kann er beispielsweise nicht dadurch beschädigt werden, dass ein Gegenstand an dem Tragelement entlang reibt.

In vorteilhafter Ausgestaltung bildet oder umfasst die mindestens eine Aussparung eine Dehnungsfuge oder Dehnfuge. Gegenüberliegende Wände der Dehnungsfuge bilden vorteilhaft die Referenzflächen für den mindestens einen Sensor.

Es ist auch möglich, dass zu den Wänden der Aussparung, beispielsweise der Dehnungsfuge oder Bewegungsfuge, winkelige Flächen, zum Beispiel etwa rechtwinkelige Flächen, Referenzflächen bilden.

Vorteilhaft ist es, wenn sich die Aussparung quer zu einer Längsrichtung des Stützabschnitts und/oder quer zur Kraftrichtung der durch den Stützabschnitt verlaufenden Kraft oder Last erstreckt.

Vorteilhaft können beispielsweise auf das Tragelement wirkende Stützlasten und/oder Zuglasten und/oder Schublasten optimal gemessen werden. Es ist auch möglich, bei einer derartig verlaufenden oder angeordneten Aussparung in Fahrzeugquerrichtung auf das Tragelement wirkende Kräfte zu messen. Die Aussparung verläuft beispielsweise in Fahrzeugquerrichtung des Kraftfahrzeugs oder des Anhängers.

Möglich ist es aber auch, dass beispielsweise zur Messung von derartigen Querkräften, also Kräften, die beispielsweise in einer sogenannten Y-Richtung verlaufen, eine Aussparung mit entsprechenden Referenzflächen quer zur Längsrichtung des Tragelements verläuft. Beispielsweise kann die Aussparung in Fahrzeuglängsrichtung verlaufen.

Vorteilhaft ist also vorgesehen, dass die mindestens eine Aussparung in Fahrzeugquerrichtung oder in Fahrzeuglängsrichtung des Kraftfahrzeugs oder des Anhängers oder des Lastenträgers verläuft, wenn der Lastenträger am Kraftfahrzeug montiert ist.

Möglich ist es aber auch, dass eine Aussparung in Schrägrichtung verläuft, also beispielsweise in einem Winkel zwischen der Fahrzeugquerrichtung und der Fahrzeuglängsrichtung.

Es ist möglich, dass der mindestens eine Sensor vollständig oder ganz in der Aussparung aufgenommen ist. Es ist aber auch möglich, dass der Sensor der Aussparung nur zugeordnet ist, so dass durch den mindestens einen Sensor ein Abstand der Referenzflächen der Aussparung messbar ist. Es ist also eine Ausführungsform denkbar, bei der der Sensor nicht im Zwischenraum oder Innenraum der Aussparung vollständig aufgenommen ist.

Die Referenzflächen können parallel zueinander verlaufen. Es ist aber auch möglich, dass die Referenzflächen einen Schrägverlauf oder eine Winkellage relativ zueinander haben und/oder winkelige Abschnitte und/oder gekrümmte Abschnitte aufweisen.

Die Referenzflächen können bei einer Belastung des Tragelements eine Relativbewegung bezüglich ihrer größten Ausdehnung aufeinander zu oder voneinander weg durchlaufen. Es ist aber auch möglich, dass die Referenzflächen in der Art einer Scherbewegung relativ zueinander beweglich sind. Eine Scherbewegung kann beispielsweise bei Torsionsbelastung des Tragelements oder Profilkörpers auftreten.

An einer jeweiligen Referenzfläche können mehrere Sensoren angeordnet sein. Zweckmäßigerweise sind die Sensoren quer zu einer Richtung eines Kraftflusses oder einer Kraftflussrichtung, die durch den Stützabschnitt verläuft, nebeneinander angeordnet.

Die erfindungsgemäße Ausgestaltung des Tragelements ist beispielsweise bei einem Querträger, Längsträger oder einem sonstigen Tragelement einer Anhängekupplung ohne weiteres realisierbar.

Das Tragelement kann selbstverständlich mehrere Sensoren und/oder auch mehrere Aussparungen aufweisen. Somit ist es möglich, an mehreren Orten die Verformung des Tragelements zu erfassen.

Die Referenzflächen sind zweckmäßigerweise von einem Kraftfluss frei, der von dem Stützabschnitt bei der Belastung durch die an dem Tragelement angreifende Last übertragen wird. Die Referenzflächen befinden sich vorteilhaft neben einem Kraftfluss, der durch den Stützabschnitt hindurch verläuft. Mithin läuft also der Kraftfluss sozusagen an den Referenzflächen vorbei, sorgt gleichzeitig aber dafür, dass sich die Referenzflächen relativ zueinander bewegen, was der mindestens eine Sensor dann erfasst. Die Referenzflächen können sich also ohne unmittelbare Kraftübertragung oder Verformung relativ zueinander bewegen, wobei erfindungsgemäß der Abstand zwischen diesen Referenzflächen ein Maß oder einen Indikator für die Verformung des Tragelements bildet.

Die Referenzflächen des Stützabschnitts oder Tragelements sind vorteilhaft einstückig mit einem Grundkörper des Stützabschnitts oder Tragelements.

Bevorzugt ist es, wenn sich die Referenzflächen quer, insbesondere rechtwinkelig oder etwa rechtwinkelig quer, zu einer Kraftflussrichtung erstrecken, die durch den Stützabschnitt verläuft.

Es ist aber auch möglich, dass sich eine Referenzfläche oder die Referenzflächen mit zumindest einer Richtungskomponente parallel oder längs der Kraftflussrichtung erstrecken. Insbesondere in diesem Fall ist es vorteilhaft, wenn die Referenzflächen von einem Kraftfluss durch den Stützabschnitt des Tragelements frei sind, der von dem Stützabschnitt bei der Belastung durch die an dem Tragelement angreifende Last übertragen wird.

Zweckmäßigerweise ist vorgesehen, dass mindestens eine der Referenzflächen an einem zungenartigen oder armartigen Indikatorelement vorgesehen ist. Bevorzugt ist es, wenn ein derartiges Indikatorelement frei vor einen Grundkörper des Tragelements vorsteht. Das mindestens eine Indikatorelement bildet also beispielsweise eine Zunge oder einen Arm aus.

Beispielsweise ist es möglich, dass das eine Referenzfläche aufweisende Indikatorelement relativ zu einem weiteren, eine weitere Referenzfläche aufweisenden Indikatorelement bei der Belastung des Tragelements bewegt wird oder die Indikatorelemente insgesamt relativ zueinander beweglich sind. Beide Indikatorelemente können beispielsweise als Zungen oder Arme ausgestaltet sein.

Es ist aber auch möglich, dass nur ein Indikatorelement vorhanden ist, das auf eine bezüglich des Tragelements ortsfeste Referenzfläche hin oder von dieser Referenzfläche weg bewegbar gelagert ist. Beispielsweise kann die andere Referenzfläche an der Durchtrittsöffnung des Profilkörpers vorgesehen sein.

Das mindestens eine Indikatorelement ist vorzugsweise mit einem Grundkörper des Stützabschnitts oder des Tragelements einstückig.

Zweckmäßigerweise sind die Referenzflächen an einander zugewandten Stirnseiten der Indikatorelemente angeordnet. Es ist aber auch möglich, dass eine Seitenfläche eines Indikatorelements, die winkelig zu einer Stirnseite ist, eine Referenzfläche bildet. Es ist möglich, dass Referenzflächen bildende Seitenflächen von Indikatorelementen bei einer Belastung des Tragelements durch eine angreifende Last relativ aufeinander zu oder voneinander weg bewegt werden.

Es ist auch möglich, dass eine Referenzfläche an einem nicht durch den Kraftfluss bei Belastung des Tragelements belasteten Vorsprung vorgesehen ist. Es ist zum Beispiel möglich, dass eine der Referenzflächen an einem derartigen Vorsprung vorgesehen ist, während die andere Referenzfläche an einem armartigen Vorsprung vorgesehen ist.

Bevorzugt ist es, wenn die Referenzflächen an einander gegenüberliegenden oder nebeneinander angeordneten vom Kraftfluss freien Indikatorelementen oder Indikator-Armen angeordnet sind.

Ein Sensorelement ist vorteilhaft mit der vom Kraftfluss durch den Stützabschnitt freien Referenzfläche zumindest indirekt bewegungsgekoppelt oder verbunden.

Ein Abstand zwischen den Referenzflächen beträgt beispielsweise maximal 5 cm, bevorzugt maximal 4 cm, insbesondere weniger als 3 cm oder 2cm. Ein besonders günstiger Abstand zwischen den Referenzflächen liegt in einem Bereich von 2-5 mm.

Bei einem Tragelement, das beispielsweise einen Bestandteil eines Querträgers einer Anhängekupplung (zur Montage an einer Kraftfahrzeug-Karosserie) oder eines Anhängers (zum Beispiel dessen Fahrgestell) oder eines Lastenträgers, beispielsweise dessen Tragegestell, bildet, ist es bevorzugt, wenn die mindestens eine Aussparung für den mindestens einen Sensor in einer Fahrzeugquerrichtung des Kraftfahrzeugs oder Anhängers verläuft. Die Fahrzeugquerrichtung ist quer, insbesondere rechtwinkelig quer, zur Fahrzeuglängsrichtung des Kraftfahrzeugs, nämlich der Vorzugsbewegungsrichtung des Kraftfahrzeugs orientiert. Diese Fahrzeugquerrichtung wird auch als Y-Richtung bezeichnet. Die Referenzflächen verlaufen vorzugsweise parallel oder etwa parallel zur Y-Richtung. Diese Anordnung eignet sich in besonderem Maße zur Messung von Stützlasten oder Zuglast, die am Tragelement angreifen. Die Kraftrichtungen der Stützlast und der Zuglast werden auch als Z-Richtung und X-Richtung bezeichnet.

Eine zweckmäßigerweise Ausführungsform der Erfindung sieht vor, dass mindestens zwei Sensorelemente oder mindestens zwei Sensoren einer einzigen der Referenzflächen zugeordnet sind. Bevorzugt sind Paarungen von jeweils zwei Sensorelementen, die einander gegenüberliegend an der Aussparung oder seitlich neben der Aussparung angeordnet sind. Es ist möglich, dass an oder neben der Aussparung mindestens zwei derartiger Paare von Sensorelementen angeordnet sind.

Besonders bevorzugt ist es, wenn neben oder in einer Aussparung oder Dehnfuge des Tragelements, die sich in der Y-Richtung oder Fahrzeugquerrichtung erstreckt, in Y-Richtung oder Fahrzeugquerrichtung mehrere Sensoren oder Sensorelemente nebeneinander angeordnet sind oder mehrere Sensoren oder Sensorelemente in einer Reihenrichtung nebeneinanderwirkend der Referenzfläche zugeordnet sind.

Vorzugsweise ist eine Reihenanordnung von mindestens zwei Sensoren oder Sensorelementen nebeneinander an einer jeweiligen Referenzfläche vorgesehen. Aber auch eine sozusagen zweidimensionale Anordnung ist möglich, d.h. dass an einer jeweiligen Referenzfläche in zueinander winkeligen Richtungen mindestens zwei Sensoren oder Sensorelemente nebeneinander angeordnet sind oder der Referenzfläche in diesen winkeligen Richtungen zugeordnet sind. Die Sensoren oder Sensorelemente können also beispielsweise linear nebeneinander oder mehrdimensional, zum Beispiel matrixartig, an der jeweiligen Referenzfläche angeordnet sein oder der Referenzfläche in dieser Gestalt zugeordnet sein.

Bevorzugt umfasst die mindestens eine Aussparung eine sich von einer Öffnung an einer Außenoberfläche des Tragelements weg erstreckende Vertiefung oder ist durch die Vertiefung gebildet. Die Referenzflächen sind zweckmäßigerweise zur Öffnung winkelig, beispielsweise orthogonal. An dieser Stelle sei aber bemerkt, dass die mindestens eine Aussparung auch sozusagen in einem Kernbereich des Tragelements vorgesehen sein kann, beispielsweise als eine Art Bohrung. Wenn die Aussparung jedoch an einer Außenoberfläche bzw. von einer Außenoberfläche weg erstreckend ausgestaltet ist, wird dadurch sozusagen eine maximale Verformung durch den Sensor messbar.

Bevorzugt ist die Aussparung schlitzförmig. Die Aussparung ist also vorzugsweise relativ schmal und/oder an einer Nut vorgesehen. Die Nut kann beispielsweise im Querschnitt U-förmig sein. Bevorzugt ist beispielsweise eine Nut, die sich im Bereich ihres Nutbodens verbreitert, wobei die Referenzflächen abseits vom Nutboden, an einem schmaleren Abschnitt, vorgesehen sind. Mithin ist also sozusagen ein erweiterter oder verbreiteter Nutboden vorhanden, der nachfolgend als eine Ausdehnungskavität erläutert ist. Besonders bevorzugt ist beispielsweise eine T-förmige Gestalt, was später noch deutlich wird.

Zwischen dem Stützabschnitt und den Referenzflächen ist zweckmäßigerweise eine Ausdehnungskavität angeordnet oder vorgesehen. Eine Querbreite der Ausdehnungskavität in einer Richtung parallel zu dem Abstand zwischen den Referenzflächen ist zweckmäßigerweise größer als der Abstand zwischen den Referenzflächen.

Der Begriff "Ausdehnungskavität" kann im Sinne einer Ausdehnung oder Aufweitung verstanden werden, aber auch im Sinne einer Stauchung. Mit anderen Worten könnte man auch von einer Stauchungskavität sprechen, um die bidirektionale Beweglichkeit der Referenzflächen, die durch die Ausdehnungskavität bei einer jeweiligen Verformung des Tragelements verbessert ist, zum Ausdruck zu bringen.

Dadurch ist eine besonders große Auslenkung der Referenzflächen relativ zueinander möglich. Die Ausdehnungskavität verläuft beispielsweise winkelig, insbesondere rechtwinkelig zu der vorgenannten Vertiefung, an welcher die Referenzflächen vorgesehen sind.

Die Aussparung und die Ausdehnungskavität können insgesamt eine schlüssellochartige oder ovale oder elliptische oder eiförmige Gestalt haben. Ein breiterer Bereich der in Gestalt eines Schlüssellochs ausgebildeten oder ovalen Kavität oder Ausnehmung bildet dann beispielsweise die Ausdehnungskavität, während der schmalere Bereich die Aussparung für den mindestens einen Sensor darstellt.

Die Aussparung und die Ausdehnungskavität weisen zweckmäßigerweise eine T-förmige Gestalt auf. Beispielsweise bildet die Aussparung einen Längsschenkel, insbesondere einen solchen, der sich von einer Außenoberfläche des Tragelements weg in Richtung zu dessen inneren Bereich erstreckt, wobei die Ausdehnungskavität einen Querschenkel zu dem Längsschenkel bildet, insbesondere einen Querschenkel, der orthogonal oder in einem sonstigen Winkel quer zu dem Längsschenkel verläuft.

Die Aussparung und die Ausdehnungskavität können aber auch eine schlüssellochartige Gestalt haben.

Von dem Stützabschnitt können sozusagen Arme abstehen. Bevorzugt ist es, wenn die Referenzflächen an freien Endbereichen von Armen vorgesehen sind, die von dem Stützabschnitt abstehen. Die Arme sind vorzugsweise L-förmig und/oder weisen zueinander winkelige Schenkel auf.

Bevorzugt ist es, wenn der mindestens eine Sensor nicht vor eine Außenoberfläche des Tragelements vorsteht.

An dieser Stelle sei bemerkt, dass durch eine Anpassung der Ausgestaltung von Ausdehnungskavität und/oder Aussparung, beispielsweise Geometrie und/oder Größe oder dergleichen, die gewünschten Auslenkungsverhältnisse zwischen den Referenzflächen ohne weiteres beeinflussbar und an die jeweiligen messtechnischen oder belastungstechnischen Erfordernisse anpassbar sind. So kann beispielsweise ganz bewusst eine kleine, die Tragfähigkeit des Tragelements wenig beeinflussende Aussparung und/oder Ausdehnungskavität vorgesehen sein. Größere Abstände und/oder eine größere Ausdehnungskavität können zwar einerseits die Tragfähigkeit des Tragelements etwas stärker schwächen, andererseits für größere Auslenkungen der Referenzflächen relativ zueinander sorgen.

Vorteilhaft ist vorgesehen, dass das Tragelement oder die das Tragelement aufweisende Baueinheit (Anhängekupplung, Lastenträgern oder Anhänger) und/oder der mindestens eine Sensor eine Auswerteeinrichtung zur Auswertung mindestens eines Signals des mindestens einen Sensors, insbesondere integral, aufweist. Die Auswerteeinrichtung weist beispielsweise einen Mikroprozessor zur Verarbeitung von Signalen des mindestens einen Sensors und/oder einen Speicher zur Speicherung von Sensorsignalen auf. Bevorzugt ist es, wenn die Auswerteeinrichtung zur Auswertung von Signalen betreffend mindestens eine Kraftrichtung, vorzugsweise mindestens zwei Kraftrichtungen, ausgestaltet ist.

Der mindestens eine Sensor ist zweckmäßigerweise zur Erfassung einer Verformung des Tragelements bei Belastung in Richtung einer vertikalen Achse bei Gebrauch des Tragelements und/oder mindestens einer horizontalen Achse bei Gebrauch des Tragelements ausgestaltet. Beispielsweise ist der mindestens eine Sensor zur Erfassung einer Verformung des Tragelements bei einer Belastung durch eine Stützlast, insbesondere einer auf die Kupplungskugel oder das Kuppelelement wirkenden Stützlast, einer Stützlast bei Belastung des Lastenträgers oder des Anhängers, ausgestaltet. Der mindestens eine Sensor ist zweckmäßigerweise aber auch ergänzend oder alternativ zur Erfassung mindestens einer entlang einer horizontalen Achse wirkenden Kraft, beispielsweise einer Schubkraft oder Zugkraft, insbesondere einer Kraft in Richtung einer Fahrzeuglängsrichtung und/oder in Richtung einer Fahrzeugquerrichtung des Kraftfahrzeugs, ausgestaltet. Mithin ist es also möglich, dass mit dem mindestens einen Sensor auch mehrere Kraftrichtungen erfassbar sind. Ferner ist es möglich, dass der mindestens eine Sensor zur Erfassung einer Torsion, die auf das Tragelements wirkt, ausgestaltet ist.

Beispielsweise können die Referenzflächen bei Torsion des Tragelements, insbesondere einer Torsion um dessen Längsachse, eine Scherbewegung relativ zueinander durchlaufen, die durch den Sensor messbar ist.

Bevorzugt ist es, wenn die Aussparung mit einer Sensoraufnahme kommuniziert, in welcher eine Komponente des mindestens einen Sensors, beispielsweise eine Auswerteeinrichtung zur Auswertung mindestens eines Signals des mindestens einen Sensors, angeordnet oder anordenbar ist. Somit kann also die Sensoraufnahme die Komponente des Sensors, insbesondere die Auswerteeinrichtung, schützen. Die Sensoraufnahme ist beispielsweise als eine Vertiefung, Bohrung oder dergleichen in dem Tragelement ausgestaltet. Bevorzugt ist es, wenn die Sensoraufnahme von der Ausdehnungskavität gebildet ist oder in anderer Formulierung die Ausdehnungskavität direkt bildet. Somit hat also die Sensoraufnahme sozusagen eine Doppelfunktion, nämlich einerseits mindestens eine Komponente des Sensors zu schützen oder aufzunehmen, andererseits die Ausdehnungseigenschaften bzw. die Auslenkung der Referenzflächen relativ zueinander günstig zu beeinflussen, beispielsweise eine größere Auslenkung der Referenzflächen zu ermöglichen als ohne Vorhandensein der Ausdehnungskavität oder Sensoraufnahme möglich wäre.

Die Sensoraufnahme kommuniziert zweckmäßigerweise mit mindestens einer Durchtrittsöffnung, durch die ein Befestigungselement zur Verbindung mit der in der Sensoraufnahme angeordneten Komponente des mindestens einen Sensors durchsteckbar ist. Das Befestigungselement ist beispielsweise ein Niet, eine Schraube oder dergleichen.

Bevorzugt weist das Tragelement eine Montageöffnung auf, die an einer zu den Referenzflächen winkeligen Querseite des Tragelements vorgesehen ist. Beispielsweise erstreckt sich die vorgenannte Vertiefung oder Aussparung, an der die Referenzflächen vorgesehen sind, von einer Seite des Tragelements weg, während die Montageöffnung an einer zu dieser Seite winkeligen Seite, beispielsweise einer Querseite des Tragelements, vorgesehen ist.

Es ist möglich, dass zwei einander gegenüberliegende Montageöffnungen vorgesehen sind, d.h. dass der mindestens eine Sensor und/oder eine zusätzliche Komponente des Sensors, zum Beispiel die Auswerteeinrichtung, wahlweise durch die eine Montageöffnung oder durch die gegenüberliegende Montageöffnung in der Sensoraufnahme oder der Aussparung angeordnet werden kann.

Eine Aussparung, Sensoraufnahme oder Ausdehnungskavität kann eine Durchgangsöffnung darstellen, das heißt dass sie das jeweilige Tragelement durchsetzt. Es ist aber auch möglich, dass die Aussparung, Sensoraufnahme oder Ausdehnungskavität sozusagen ein Sackloch oder jedenfalls eine blinde Aufnahme darstellt, also einen Boden aufweist und das Tragelement nicht durchsetzt. Beispielsweise kann die Aussparung, Sensoraufnahme oder Ausdehnungskavität aus dem jeweiligen Tragelement ausgefräst werden.

Bevorzugt ist es, wenn ein Sensorelement des mindestens einen Sensors mit mindestens einer Referenzfläche fest verbunden ist. Beispielsweise kann ein kapazitives, induktives oder optisches Sensorelement direkt mit der Referenzfläche verbunden sein. Es ist zum Beispiel möglich, einen Dehnungsmessstreifen mit einander gegenüberliegenden Referenzflächen der Aussparung zu verbinden, sodass dieser bei Belastung des Stützabschnitts und somit Veränderung des Abstands zwischen den Referenzflächen gedehnt oder gestaucht wird.

Die Verbindung muss aber nicht unmittelbar mit der Referenzfläche vorgesehen sein, d.h. dass das Sensorelement oder der Sensor nicht direkt an die Referenzfläche angeklebt, angenietet oder dergleichen sein muss. Es ist auch möglich, dass der Sensor oder das Sensorelement an anderer Stelle ortsfest festgelegt ist, jedoch der Abstand zur Referenzfläche konstant ist oder fest ist. Dazu kann beispielsweise ein später noch erläutertes Trägerteil vorgesehen sein, das abseits von der Referenzfläche mit dem sich verformenden Tragelement verbunden ist und den Sensor oder das Sensorelement hält. Das Sensorelement oder der Sensor wird von dem Trägerteil bezüglich der Referenzfläche ortsfest gehalten, beispielsweise frontal vor der Referenzfläche.

Es ist ferner möglich, dass der mindestens eine Sensor sozusagen in den Abstand zwischen den Referenzflächen hinein misst, jedoch nicht zwischen den Referenzflächen angeordnet ist. Das kann beispielsweise auf optischen oder akustischen Wege geschehen.

Zweckmäßigerweise ist jeweils zwei einander zugeordneten Referenzflächen ein Sensorelement des mindestens einen Sensors zugeordnet oder an der jeweiligen Referenzfläche angeordnet. Zwischen den Sensorelementen ist ein Abstand vorhanden. Die Sensorelemente sind relativ zueinander frei beweglich, wenn sich die Referenzflächen bei der Verformung des Tragelements relativ zueinander bewegen.

Eine bevorzugte Ausführungsform der Erfindung sieht vor, dass ein jeweiliges Sensorelement oder ein Sensor nicht unmittelbar mit der Referenzfläche verbunden ist oder verbunden sein muss, sondern an einem Trägerteil angeordnet ist. Das Trägerteil weist zweckmäßigerweise einen Halteabschnitt zum Halten des Sensorelements oder Sensors auf. Das Sensorelement umfasst beispielsweise ein kapazitives und/oder induktives und/oder optisches Sensorelement. Der Halteabschnitt befindet sich beispielsweise frontal vor der Referenzfläche. Neben dem Halteabschnitt erstreckt sich ein Befestigungsabschnitt des Trägerteils. Dieser Befestigungsabschnitt seinerseits wiederum ist mit dem Tragelement verbunden. Beispielsweise erstreckt sich die Durchtrittsöffnung für das Befestigungselement zu dem Befestigungsabschnitt des Trägerteils für den Sensor, sodass durch die Durchtrittsöffnung hindurch eine Schraube oder ein sonstiges Befestigungselement mit dem Befestigungsabschnitt verbunden werden kann.

Bevorzugt hat das Trägerteil eine winkelige, insbesondere L-förmige Gestalt.

Das Trägerteil kann einen Bestandteil des Sensors bilden. Es ist beispielsweise möglich, dass eine Sensorfläche, zum Beispiel eine kapazitive Fläche oder Elektrode, an dem Halteabschnitt unmittelbar angeordnet ist.

Insbesondere ist die Referenzfläche an einer freien Stirnseite eines Armabschnitts vorgesehen, der von dem Stützabschnitt absteht. Vor der freien Stirnseite ist das Sensorelement oder der Sensor angeordnet. Bevorzugt wird das Sensorelement oder der Sensor dabei von dem bereits erläuterten Trägerteil getragen oder gehalten.

Das Kraftfahrzeug kann ein Kraftfahrzeug mit Verbrennungsmotor, Elektromotor oder beidem sein. Insbesondere handelt es sich bei dem Kraftfahrzeug vorzugsweise um einen Personenkraftwagen.

Der mindestens eine Sensor ist vorzugsweise als ein Sensormodul ausgestaltet oder weist ein Sensormodul auf.

Das Sensormodul bildet also eine Baueinheit, die an dem Tragelement anordenbar ist. Die Außenumfangskontur des Sensormoduls, beispielsweise eines Gehäuses des Sensormoduls, passt in oder zur Innenumfangskontur der Vertiefung an dem Tragelement, beispielsweise für eine formschlüssige Aufnahme.

Einen weiteren vorteilhaften Aspekt stellt es dar, wenn das Sensormodul ein Sensorgehäuse aufweist, in welchem der mindestens eine Sensor angeordnet ist. In dem Sensorgehäuse können auch Sensorteile angeordnet sein, die bei der Montage des Sensormoduls am Tragelement individuell in Kontakt mit dem Tragelement gelangen, beispielsweise ein erstes Sensorteil und ein zweites Sensorteil. Die Sensorteile sind zweckmäßigerweise trotz der Anordnung in dem Sensorgehäuse bei einer Verformung des Tragelements relativ zueinander beweglich, sodass sie unterschiedliche Abstände zueinander haben können und auf diesem Wege eine Verformung des Tragelements durch eine entsprechende Abstandsmessung, beispielsweise eine kapazitive, optische oder induktive, Abstandsmessung, durch das Sensormodul durchgeführt werden kann.

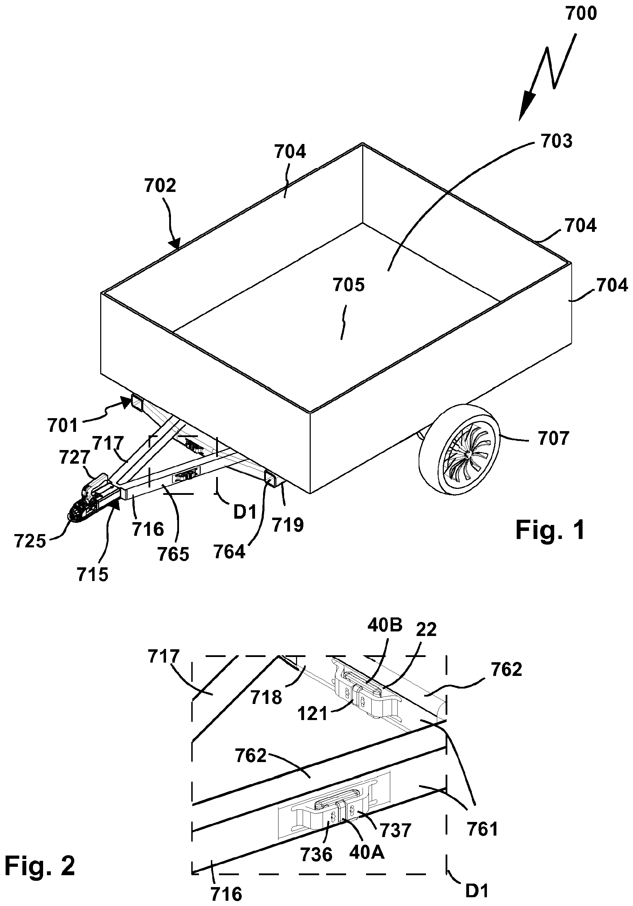

Nachfolgend wird die Erfindung anhand eines Ausführungsbeispiels näher erläutert. Es zeigen
- Figur 1: eine perspektivische Ansicht eines Anhängers zum Anhängen an ein Kraftfahrzeug, von dem in
- Figur 2: ein Detail D1 dargestellt ist,

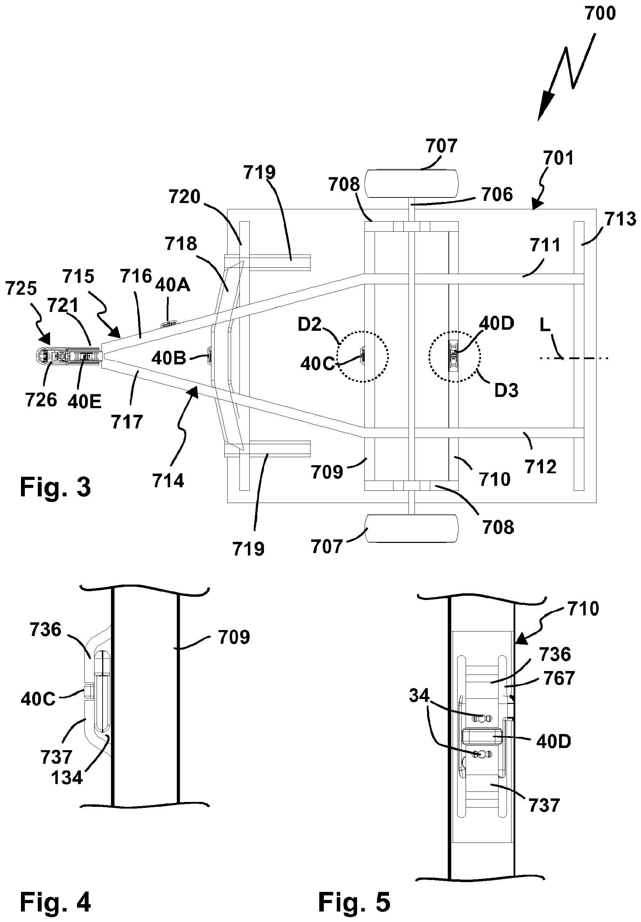

- Figur 3: eine Ansicht von unten auf den Anhänger gemäß Figur 1, von dem in
- Figur 4: ein Ausschnitt D2 und in
- Figur 5: ein Ausschnitt D3 dargestellt sind,
- Figur 6: eine Seitenansicht des Anhängers gemäß vorstehender Figuren, von dem in
- Figur 7: ein Detail D4 dargestellt ist,
- Figur 8: einen Querschnitt durch das Detail D4 gemäß Figur 7 entlang einer Schnittlinie A-A in Figur 7,
- Figur 9: eine perspektivische Schrägansicht auf eine Anhängekupplung mit einem erfindungsgemäßen Tragelement, die in
- Figur 10: von der Seite dargestellt ist und einen Kupplungsarm trägt,
- Figur 11: ein Detail D5 des Kupplungsarms gemäß Figur 10 mit einem Sensor, jedoch ohne ein Sensorgehäuse,
- Figur 12: einen Längsschnitt durch den Kupplungsarm gemäß Figuren 10, 11,
- Figur 13: eine schematische Frontalansicht auf ein Tragelement als Bestandteil beispielsweise eines Anhängers oder eines Lastenträgers,
- Figur 14: ein schematisches Ausführungsbeispiel eines Tragelements als Bestandteil einer Anhängekupplung, eines Lastenträgers oder eines Anhängers, bei dem eine eine Dehnung oder Verformung des Tragelements indizierende Aussparung, die sensorisch erfasst wird, neben einem zungenartigen Element des Tragelements vorgesehen ist,
- Figur 15: einen Lastenträger mit Sensorelementen, und
- Figur 16: einen Kupplungsarm mit einem Kuppelelement an einem Profilkörper, an dem ein Sensor angeordnet ist.

Ein Anhänger 700 umfasst ein Fahrgestell 701, dass zum Tragen eines Anhängeraufbaus 702 dient. Der Anhängeraufbau 702 umfasst beispielsweise eine Bodenwand 703, von der seitliche Bordwände 704 nach oben abstehen, so dass insgesamt ein Aufnahmeraum 705 umschlossen ist. Die Ausgestaltung des Anhängeraufbaus 702 kann selbstverständlich anders sein, beispielsweise einen Kasten umfassen, eine Tragplattform oder dergleichen.

Das Fahrgestell 701 weist eine Achse 706 auf, an der Räder 707 drehbar gelagert sind. Die Achse 706 ist beispielsweise an Achsträgern 708 gehalten, die ihrerseits wiederum von Querträgern 709, 710 gehalten sind. Die Querträger 709, 710 erstrecken sich quer zu einer Längsachse L des Anhängers 700 und sind beispielsweise mit Längsträgern 711, 712 verbunden, die sich in einer Längsachse L des Anhängers 700 erstrecken. Die Längsträger 711, 712 sind an einem Heckbereich des Anhängers 700 weiterhin durch einen sich quer zur Längsachse L erstreckenden Querträger 713 miteinander verbunden.

In Fahrtrichtung nach vorn des Anhängers 700 steht eine Deichsel 715 des Fahrgestells 701 vor, an deren freiem Endbereich eine insbesondere als Zugkugelkupplung ausgestaltete Kupplungseinrichtung 725 zum Anhängen an ein Kuppelstück, beispielsweise das später noch erläuterte Kuppelstück 12, vorgesehen ist. Das Kuppelstück 12 ist beispielsweise als Kugel ausgestaltet. Die Kupplungseinrichtung 725 weist beispielsweise eine Kupplungsaufnahme 726 zur Aufnahme des Kuppelstücks 12 sowie ein Betätigungselement 727 zum Öffnen und Schließen der Kupplungsaufnahme 726 auf.

Die Deichsel 715 weist winkelig zueinander in Richtung der Kupplungseinrichtung 725 aufeinander zulaufende Tragarme 716, 717 auf, die beispielsweise durch eine Quertraverse 718 miteinander verbunden sind. Die Tragarme 716, 717 gehen an ihren von der Kupplungseinrichtung 725 entfernten Endbereichen in die Längsträger 712, 711 über, wobei sich in diesem Übergangsbereich ein entsprechender Winkelabschnitt befindet. Dieser Winkelabschnitt ist mit dem Querträger 709 verbunden.

Die Quertraverse 718 erstreckt sich zwischen Längsträgern 719, die am Anhängeraufbau befestigt sind. Die Quertraversen 718 können durch einen sich quer zur Längsachse L erstreckenden Querträger 720 miteinander verbunden sein.

Ein Kupplungstrageelement 721 ist am freien Endbereich der Tragarme 716, 717 angeordnet, welches die Kupplungseinrichtung 725 trägt.

Die Querträger 709, 710, 713, die Längsträger 711, 712 sowie die Komponenten der Deichsel 715, insbesondere die Tragarme 716, 717 und das Kupplungstrageelement 721, bilden Fahrgestellkomponenten 714.

Die Fahrgestellkomponenten 714 werden nachfolgend einheitlich als Tragelemente 61 bezeichnet. Die Fahrgestellkomponenten 714 oder Tragelemente 61 weisen nämlich jeweils einen Profilkörper 765 auf, der als ein Hohlprofil ausgestaltet ist. Der Profilkörper 765 weist beispielsweise eine Tragwand 761 auf, von der Tragwände 762, 762 abstehen und der eine Tragwand 763 gegenüberliegt, die ebenfalls mit den Tragwänden 762, 762 verbunden ist. Die Tragwände 761-763 begrenzen einen Hohlraum 764.

Wenn der Anhängeraufbau 702 belastet wird, wird diese Last durch das Fahrgestell 701 aufgenommen. Die Fahrgestellkomponenten 714 des Fahrgestells 701, beispielsweise die Tragarme 716, 717 der Deichsel 715, müssen die Last tragen und verformen sich bei dieser Belastung. Auch in Richtung der Längsachse L greifen Zugkräfte und Schubkräfte am Fahrgestell 701 an, welche zu Verformungen der Fahrgestellkomponenten 714 führen.

Zur Erfassung derartiger Belastungen und Verformungen dienen Sensoren 40A-40E, die an einer jeweiligen Tragwand 761 angeordnet sind. Beispielsweise ist der Sensor 40A an der Deichsel 715, insbesondere dem Tragarm 716 angeordnet. Der Sensor 40B ist an der Quertraverse 718 angeordnet. Der Sensor 40C ist am Querträger 709 und der Sensor 40D ist am Querträger 710 angeordnet. Schließlich ist noch der Sensor 40E am Kupplungstrageelement 721 am freien Endbereich der Tragarme 716 angeordnet, welches die Kupplungseinrichtung 725 trägt.

Die Sensoren 40A und 40B dienen beispielsweise zur Messung einer Zuglast oder Stützlast.

An einem Lastenträger 900 sind exemplarisch Sensoren 40S und 40R dargestellt, mit denen beispielsweise Belastungen eines Tragegestells 901 des Lastenträgers 900 messbar sind.

Das Tragegestell 901 weist beispielsweise einen Grundträger 903 auf, von dem die Träger 902 in der Art von U-förmigen Seitenschenkeln abstehen. Der Grundträger 903 kann ebenso wie einer oder beide der Träger 902 mit einem Sensor 40R ausgestattet sein. Die Träger 902, 903 sind vorzugsweise Profilkörper 965 oder jedenfalls Tragelemente, die zueinander winkelige Tragwände aufweisen, beispielsweise Tragwände 904 und 905. Den Tragwänden 904 und 905 können weitere Tragwände 906, 907 gegenüberliegen, sodass insgesamt ein geschlossenes, insbesondere im Querschnitt etwa rechtwinkeliges Profil des Profil körpers 965 gebildet ist. Beispielsweise ist an der Tragwand 904 der Sensor 40R angeordnet.

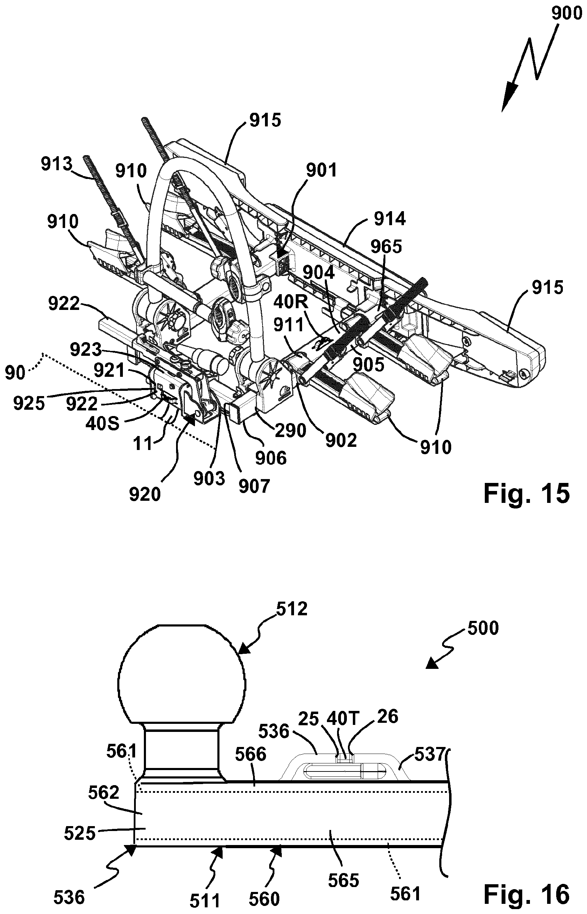

An dem Tragegestell 901 können Tragelemente 910, beispielsweise Trägerrinnen zum Abstellen von Fahrrädern, angeordnet sein. Die Tragelemente 910 sind zweckmäßigerweise anhand von Lagern 911 zwischen der in Figur 15 dargestellten Nutzstellung oder Tragestellung und einer für die Nichtbenutzung vorgesehenen Nichtgebrauchsstellung verstellbar, in der sie beispielsweise in einen Zwischenraum zwischen den Trägern 902 eingeschwenkt sind. An den Tragelementen 910 sind vorzugsweise Befestigungselemente 913, beispielsweise Riemen, Stützen oder dergleichen angeordnet. An den von dem Grundträger 903 abgewandten Längsendbereichen der Träger 902 ist ein Kennzeichenträger 914 angeordnet. Am Kennzeichenträger 914 sind vorzugsweise Leuchten 915, insbesondere schwenkbar, angeordnet.

An dem Tragegestell 901 kann beispielsweise eine Kupplungsvorrichtung 920 zur lösbaren Befestigung an dem Kuppelstück 12 vorgesehen sein. Die Kupplungsvorrichtung 920 weist ein Gehäuse 921 auf, welches ebenfalls Profilkörper 925 umfasst. Der Profilkörper 925 hat zueinander winkelige und miteinander verbundene Tragwände 922, 923 , wobei beispielsweise an der Tragwand 922 der Sensor 40S angeordnet ist.

Bei einer in Figur 16 schematisch dargestellten Anhängekupplung 500 ist ein Kuppelstück 512, beispielsweise eine Kupplungskugel, an einem Kupplungsarm 511 angeordnet. Der Kupplungsarm 511 umfasst einen Profilkörper 565, der ein Tragelement 560 bildet. Der Profilkörper 525 weist zueinander winkelige und miteinander beispielsweise über Eck oder anhand von Bogenabschnitten verbundene Tragwände 561, 562 auf. Im Betriebszustand bilden beispielsweise die einander gegenüberliegenden Tragwände 561 obere und untere Wände, während die einander gegenüberliegenden Tragwände 562 Seitenwände des Profilkörpers 565 darstellen. Eine Tragwand 562 verbindet jeweils zwei Tragwände 561.Der Profilkörper 525 weist beispielsweise einen rechteckigen Querschnitt auf. Die Tragwände 561, 562 begrenzen einen Hohlraum oder Innenraum des Profilkörpers 525.

An der in der Zeichnung oberen Tragwand 561 befindet sich ein Sensor 40T, der eine Belastung des Tragelementes 560 messen kann. Von der Tragwand 561 stehen beispielsweise Indikatorelemente 536, 537 vor, an deren freien Endbereichen, die einander gegenüberliegen, die Referenzflächen 25, 26 für den Sensor 40T vorgesehen sind. Die Indikatorelemente 536, 537 sind mit der Tragwand 561 einstückig. Die Indikatorelemente 536, 537 sind vorteilhaft in der Art von Zungen ausgestaltet, die vor die Tragwand 561 vorstehen. Beispielsweise sind die Indikatorelemente 536, 537 aus einem plattenartigen Wandkörper 566 der Tragwand 561 ausgestanzt und ausgeformt.

Die Sensoren 40A-40E, 40R, 40S, 40T sind ähnlich oder identisch aufgebaut wie ein Sensor 40K, der an einem Kupplungsarm 11 der nachfolgend erläuterten Anhängekupplung 10 vorgesehen ist. Zur Erläuterung und zum Verständnis der Sensoren 40A-40E, 40R, 40S, 40T dient also der Sensor 40 K.

Der Kupplungsarm 11 ist mit einem Steckabschnitt 16 an einer fahrzeugseitigen Halterung 80 befestigbar. Die Halterung 80 weist eine Steckaufnahme 81 zum Einstecken des Steckabschnitts 16 auf. Der Kupplungsarm 11 ist mit einer Verriegelungseinrichtung 17 mit der Halterung 80 verriegelbar. Die Verriegelungseinrichtung 17 umfasst einen Verdrängerkörper 19, beispielsweise einen Sperrbolzen, der in einer nicht dargestellten Führung des Kupplungsarms 11 verschieblich aufgenommen ist. Der Verdrängerkörper verdrängt Sperrkörper 18, beispielsweise Kugeln, durch nicht dargestellte Öffnungen des Steckabschnitts 16 nach radial außen vor den Steckabschnitt 16, wo sie in mindestens eine Verriegelungsaufnahme 82, insbesondere eine Rinne, der Halterung 80 eingreifen. Der Verdrängerkörper 19 ist z.B. durch ein Handrad 19A betätigbar.

Zur weiteren Abstützung und zum Halt des Kupplungsarms 11 an der Halterung 80 tragen weiterhin Formschlusskonturen 29, beispielsweise Keilschrägen, seitlich am Steckabschnitt 16 bei, die in korrespondierende Formschlussaufnahmen der Halterung 80 formschlüssig eingreifen. Die durch die Öffnungen 18 nach außen tretenden Verriegelungskörper ziehen den Steckabschnitt 16 sozusagen in die Steckaufnahme 81 hinein, dabei gleichzeitig die Formschlusskonturen 29 in die Formschlussaufnahmen, sodass der Kupplungsarm 11 an der Halterung 80 einen festen Halt hat.

Die Halterung 80 ist an einem Querträger 90 befestigt, der seinerseits wiederum am Heck des Kraftfahrzeugs 100 anhand von Längsträgern 91 befestigt ist. Das Kraftfahrzeug 100 ist beispielsweise ein Pkw. Der Querträger 90 verläuft quer am Heck des Kraftfahrzeugs 100. Der Querträger 90 und die Halterung 80 können Bestandteile der Anhängekupplung 10 bilden. Alternativ zu dieser Konstruktion wäre beispielsweise möglich, dass der Kupplungsarm 11 fest am Querträger 90 befestigt ist, beispielsweise verschraubt oder dergleichen. Weiterhin ist auch eine bewegliche Lagerung des Kupplungsarms 11 bezüglich des Kraftfahrzeugs 100, insbesondere des Querträgers 90 möglich, wofür dann ein Schwenklager und/oder Schiebelager zwischen dem Kupplungsarm 11 und dem Querträger 90 oder einer sonstigen den Kupplungsarm 11 tragenden Komponente möglich ist (nicht dargestellt). Schließlich sei noch am Rande erwähnt, dass anstelle des Kupplungsarms 11 auch ein sonstiges Tragelement, beispielsweise ein Tragarm für einen Lastenträger, vorgesehen sein kann. Auch ein solcher Tragarm oder die vorgenannte Halterung, insbesondere auch das Schwenklager oder Schiebelager, können in der nachfolgend erläuterten Weise mit Aussparungen und zugeordneter Sensorik versehen sein, um Verformungen des jeweiligen Tragelements optimal zu erfassen.

Der Kupplungsarm 11 weist an seinem freien Endbereich ein Kuppelstück 12, beispielsweise eine Kupplungskugel auf. Der Endbereich des Kupplungsarms 11 befindet sich am Ende eines Krümmungsabschnitts 13. Zwischen dem Krümmungsabschnitt 13 und einem weiteren, sich an den Steckabschnitt 16 anschließenden Krümmungsabschnitt 15, befindet sich ein im Wesentlichen geradlinig verlaufender Armabschnitt 14 des Kupplungsarms 11.

Sämtliche der vorgenannten Abschnitte des Kupplungsarms 11, insbesondere aber der gerade verlaufende Armabschnitt 14, werden durch Beaufschlagung mit einer Last, beispielsweise einer Stützlast Pz in Achsrichtung einer Achse Z, oder einer Zuglast/Schublast Px in Richtung einer Achsrichtung X verformt. In besonderem Maße ist dies beim Armabschnitt 14 der Fall, aber auch bei den Krümmungsabschnitten 13, 15.

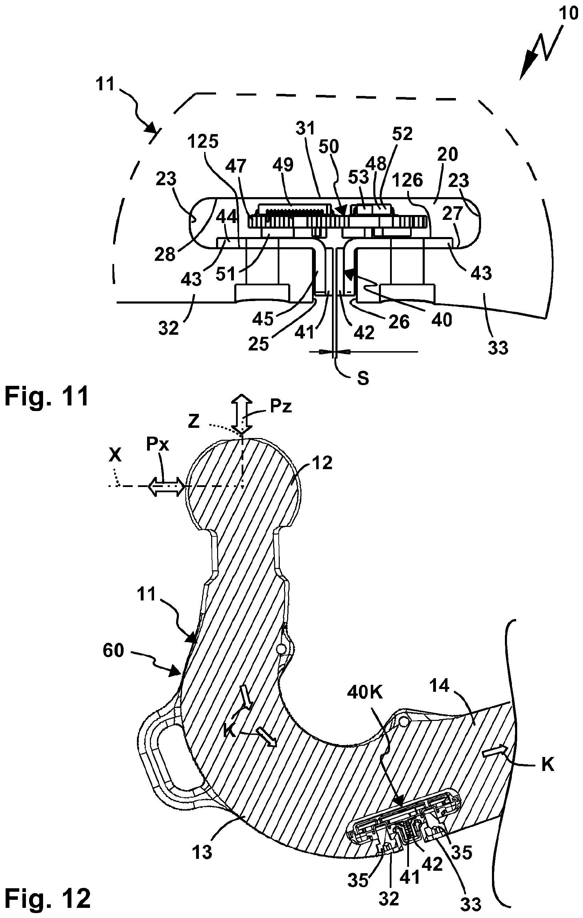

Eine Krafteinleitung auf das Kuppelstück 12 führt beispielsweise zu einem Kraftfluss K, der exemplarisch in Figur 12 eingezeichnet ist. Dadurch verformt sich der Kupplungsarm 11 beispielsweise entlang einer Krümmungslinie V1 oder einer Krümmungslinie V2, abhängig davon, ob eine positive oder negative Stützlast Pz auf das Kuppelstück 12 einwirkt. Die Verformung ist elastisch.

In ähnlicher Weise wirkt sich die Belastung auf den Kupplungsarm 11 auch auf den Querträger 90 aus. An dem Querträger 90 tritt beispielsweise eine Verformung V3 auf, wenn dieser mit einer Zuglast belastet wird. Eine Zuglast ist in diesem Fall eine Last in X-Richtung bzw. in Fahrtrichtung des Kraftfahrzeugs 100, wenn beispielsweise ein Anhänger an den Kupplungsarm 11 angehängt ist.

Eine Verformung oder Krümmung des Kupplungsarms 11, der ein Tragelement 60 bildet, oder des Querträgers 90, der ein Tragelement 62 darstellt, wird durch die nachfolgend erläuterte Sensoranordnung mit Sensoren 40K und 40Q erfasst.

An dem Kupplungsarm 11 und am Querträger 90 sind Sensoren 40K und 40Q angeordnet, die ihrerseits wiederum in Aussparungen 21, 121 angeordnete Sensorelemente 41, 42 umfassen.

Die Aussparung 21 befindet sich z.B. an einer Unterseite 30 des Kupplungsarms 11.

Der Querträger 90 bildet ein Tragelement 62, das ebenfalls als ein Profilkörper 765 ausgestaltet ist und somit die Tragwände 761-763 aufweist, welche einen geschlossenen Profilkörper 765 ausbilden. An der Tragwand 761 des Tragelements 62 ist das Sensorelement 40Q vorgesehen. Das Sensorelement 40Q ist wie die Sensorelemente 40A-40E in oder an einer Aussparung 121 vorgesehen, welche sich zwischen den Indikatorelementen 736, 737 befindet.

Die Indikatorelemente 736,737 sind mit der Tragwand 761 einstückig. Sie sind in der Art von Zungen ausgestaltet, die vor die Tragwand 761 vorstehen. Beispielsweise sind die Indikatorelemente 736, 737 aus einem plattenartigen Wandkörper 766 der Tragwand 761 ausgestanzt und ausgeformt. Die Indikatorelemente 736, 737 sind beispielsweise Stanz-Biegeteile, die aus dem Wandkörper 766 ausgestanzt und umgeformt sind. Dadurch ist im Wandkörper 766 ein Ausschnitt 767 vorhanden, vor denen die Indikatorelemente 736, 737 vorstehen. Der Ausschnitt 767 ist eine Durchtrittsöffnung, die mit dem Hohlraum 764 kommuniziert.

Die Indikatorelemente 736, 737 weisen Fußabschnitte 738 auf, die beispielsweise bogenförmig aus dem Wandkörper 766 heraus verlaufen und in einen vor eine Flachseite 768 des Wandkörper 766 vorstehenden Übergangsabschnitt 739 übergehen. Der Übergangsabschnitt 739 seinerseits wiederum geht mit einem bogenförmigen Abschnitt 740 in einen Endabschnitt 741 über. Die Endabschnitte 741 der Indikatorelemente 736, 737 liegen einander gegenüber, wobei zwischen ihren Stirnseiten die Aussparung 121 vorhanden ist.

Die Konstruktion der Aussparung 21 ist davon etwas abweichend. Sie ist beispielsweise als eine Bohrung oder Ausfräsung am Kupplungsarm 11 hergestellt, sozusagen aus dem Vollen hergestellt. Dennoch ist es möglich, bei dem Kupplungsarm 11 bzw. dem Tragelement 60 und den Tragelementen 61, 62 dieselben Sensoren 40A-40E, 40K, 40Q zu verwenden, die nachfolgend vereinfacht als Sensor 40 bezeichnet werden.

Die Aussparungen 21, 121 umfassen einander gegenüberliegende Wände, die Referenzflächen 25, 26 bilden. An diesen Referenzflächen 25, 26 sind die Sensorelemente 41, 42 zumindest indirekt angeordnet. Die Referenzflächen 25, 26 bewegen sich bei einer Verformung des Kupplungsarms 11, der ein Tragelement 60 der Anhängekupplung 10 bildet, zueinander hin oder voneinander weg, sodass ein Spalt S zwischen den Sensorelementen 41, 42 größer oder kleiner wird. Die Sensorelemente 41, 42 messen beispielsweise kapazitiv, induktiv, optisch oder dergleichen anders einen Abstand zwischen einander, also die Breite des Spaltes S. Dies ist zugleich ein Indikator für die Verformung des Kupplungsarms 11, also des Tragelements 60.

Neben der jeweiligen Aussparung 21, 121 befindet sich eine Ausdehnungskavität 20, 120. Die Aussparung 21, 121 und die Ausdehnungskavität 20, 120 kommunizieren unmittelbar miteinander.

Die Aussparungen 21, 121 und die Ausdehnungskavität 20, 120 sind zueinander winkelig, beispielsweise rechtwinkelig. Die Aussparungen 21, 121 und die jeweils zugeordneten Ausdehnungskavitäten 20, 120 bilden z.B. eine T-förmige Konfiguration. Beim Kupplungsarm 11, dem Tragelement 60, ist die Ausdehnungskavität 20 als Ausfräsung oder Bohrung hergestellt. Bei den Tragelementen 61, 62 ist die Ausdehnungskavität 120 dadurch gebildet, dass zwischen den Indikatorelementen 736, 737 und dem Wandkörper 766 der Ausschnitt 767 vorgesehen ist.

Seitlich sind die Ausdehnungskavitäten 20, 120 und die Aussparungen 21, 121 offen, haben also an einander entgegengesetzten Seiten des Kupplungsarms 11 Montageöffnungen 34, 134, sodass die Sensoren 40 sowie die nachfolgend noch erläuterten Auswerteeinrichtungen 50 leicht montierbar und demontierbar sind. Mithin bilden die Sensoren 40 sowie die ihnen zugeordneten Auswerteeinrichtungen 50 Sensormodule oder jedenfalls kompakte Baueinheiten, die leicht montierbar und demontierbar sind.

Die Auswerteeinrichtungen 50 sind in den Ausdehnungskavitäten 20, 120 angeordnet, die somit Sensoraufnahmen 22, 122 bilden. Die Ausdehnungskavitäten 20, 120 nehmen die Auswerteeinrichtungen 50 vorzugsweise vollständig auf, sodass sie nicht vor eine Außenoberfläche neben den Ausdehnungskavitäten 20 vorstehen und somit optimal geschützt sind.

Die Sensorelemente 41, 42 sind an Trägerteilen 43 angeordnet, die eine winkelige Gestalt haben. Die Trägerteile 43 weisen Befestigungsabschnitte 44 sowie dazu winkelige Halteabschnitte 45 auf. Die Halteschenkel oder Halteabschnitte 45 tragen jeweils eines der Sensorelemente 41, 42. Mithin hängen also sozusagen die beiden Halteabschnitte 45 vor den jeweiligen Referenzflächen 25, 26.

An den Befestigungsabschnitten 44 sind die Trägerteile 43 mit dem Kupplungsarm 11 verbunden, nämlich beispielsweise verschraubt, vernietet oder dergleichen. Beispielsweise durchdringen Schrauben 35 Durchtrittsöffnungen 24, die mit der Ausdehnungskavität 20, 120 oder der Sensoraufnahme 22, 122 kommunizieren. Die Schrauben 35 sind in die Befestigungsabschnitte 44 eingeschraubt.

Somit sind die Befestigungsabschnitte 44 mit einer Bodenfläche 27 der Sensoraufnahme 22 verbunden. Mit einer der Bodenfläche 27 gegenüberliegenden Deckenfläche 28 der Sensoraufnahme 22 haben jedoch die Sensoren 40 und die Auswerteeinrichtungen 50 keinen Kontakt, sondern einen Abstand. Das gilt auch für Längsendbereiche 23 der Sensoraufnahme 22, von denen die Trägerteile 43, als auch die Auswerteeinrichtung 50 einen Abstand haben. Mithin beschränkt sich also der Kontakt der Sensoren 40A, 40B und der Auswerteeinrichtung 50 sozusagen auf den Bodenbereich 27. Die Auswerteeinrichtungen 50 und die Sensoren 40A, 40B sind auch nicht mit einem sich entlang der Deckenfläche 28 erstreckenden Stützabschnitt 31 des Tragelements 60 oder Kupplungsarms 11 in Kontakt. Dieser Stützabschnitt 31 kann sich sozusagen frei verformen, wenn der Kupplungsarm 11 belastet wird, beispielsweise durch die Stützlast Pz, die Zuglast Px oder auch in Querrichtung dazu, nämlich in der sogenannten Fahrzeugquerrichtung, in Richtung einer Y-Achse mit einer Kraft Py.

Neben der Sensoraufnahme 22 bzw. der Ausdehnungskavität 20 erstrecken sich sozusagen Arme 33, 32, deren Außenseite von der Unterseite 30 des Kupplungsarms 11 gebildet sind, deren Innenseiten jedoch der Ausdehnungskavität 20 zugeordnet ist und die Befestigungsabschnitte 44 der Trägerteile 43 tragen.

Die Referenzflächen 25, 26 werden von den freien Stirnseiten der Arme 32, 33 gebildet oder sind daran angeordnet.

Die Arme 33, 32 können beispielsweise als Indikatorelemente ähnlich wie die Indikatorelemente 736 und 737 betrachtet werden.

Man erkennt nämlich dass sich der Kontakt der Sensoren 40 auf die Indikatorelemente 736, 737 beschränkt, die sozusagen außerhalb des Kraftflusses durch das jeweilige Tragelement 61-62 liegen, jedoch eine sich durch diesen Kraftfluss ergebende Verformung des Tragelements 61, 62 erfassen können. Bei der Sensoraufnahme 122 sind die Befestigungsabschnitte 44 der Trägerteile 43 mit Seitenflächen 742 der Indikatorelemente 736, 737 verbunden. Die Seitenflächen 742 sind zweckmäßigerweise zur Flachseite 768 des Wandkörpers 766 parallel oder flachwinkelig orientiert.

An dieser Stelle sei bemerkt, dass selbstverständlich die Sensorelemente 41, 42 unmittelbar an den Referenzflächen 26 angeordnet sein könnten, beispielsweise angeklebt, oder in sonstiger Weise mit den jeweiligen Referenzflächen 25, 26 verbunden sein können. Die Sensorelemente 41, 42 haben ausschließlich Kontakt mit den freien Endbereichen der Indikatorelemente 736, 737, also den Endabschnitten 741. Zur Seite hingegen, also beispielsweise zu den Übergangsabschnitten 739 der Indikatorelemente 736, 737, ist kein Kontakt zwischen den Sensoren 40 und dem jeweiligen Tragelement 61, 62 vorhanden. Zudem sind die Sensoren 40 der Tragelemente 61, 62 oberhalb des Ausschnitt 767 angeordnet, d.h. dass sie ähnlich wie der Sensor 40 am Kupplungsarm 11 keinen Kontakt zu einer den Referenzflächen 25, 26 oder 725, 726 gegenüber liegenden Wandfläche haben.

Der Kraftfluss K durch die Tragelemente 61, 62 läuft über einen Stützabschnitt 731 sozusagen an den Sensoren 40A-40E vorbei, wobei jedoch die Indikatorelemente 736, 737 die durch diesen Kraftfluss verursachte Verformung des Tragelements 61, 62 zum jeweiligen Sensor 40A-40E übertragen, sodass dieser eine entsprechende Belastung des Tragelements 61, 62 ermitteln kann.

Die Auswerteeinrichtungen 50 umfassen einen Träger 47, beispielsweise eine elektrische Leiterplatte oder Platine, an der Auswerteelemente, beispielsweise ein Mikroprozessor 49, Messelemente 48, ein Buskoppler 51 oder dergleichen andere Elemente zur Auswertung von Sensorsignalen der Sensorelemente 41, 42 angeordnet sind.

Die Auswerteeinrichtungen 50 können Sensorelemente 41, 42 auswerten. Dazu ist beispielsweise in einem Speicher 52 ein Auswerteprogramm 53 gespeichert, welches Programmcode aufweist, der vom Mikroprozessor 49 ausführbar ist.

Vorteilhaft weisen die Sensoren 40 jeweils ein Sensorgehäuse 54 auf. In dem Sensorgehäuse 54 ist beispielsweise die Auswerteeinrichtung 50 geschützt aufgenommen. Zweckmäßigerweise sind auch die Sensorelemente 41, 42 dort geschützt untergebracht.

Das Sensorgehäuse 54 umfasst beispielsweise ein Gehäuseunterteil 59A und ein Gehäuseoberteil 59B, die an einem Randbereich 55 miteinander verbunden sind. Das Gehäuseunterteil 59A und das Gehäuseoberteil 59B sind beispielsweise als Gehäuseschalen ausgestaltet. Am Randbereich 55 kann beispielsweise eine Dichtung 56 vorgesehen sein. Die Dichtung 56 ist beispielsweise dadurch realisiert, dass die beiden Gehäuseteile 59A, 59B labyrinthartig ineinandergreifen (am Randbereich 55 eine Labyrinthdichtung vorgesehen ist) und/oder ein Dichtsitz und/oder ein O-Ring zwischen den beiden Komponenten am Randbereich 55 vorgesehen ist. An dem Gehäuseoberteil 59B sind Durchtrittsöffnungen für die Schrauben 35 vorgesehen, an denen vorzugsweise jeweils Dichtungen 58 vorhanden sind. Beispielsweise treten die Befestigungsabschnitte 44 mit entsprechenden Schraubdomen oder Schraubvorsprüngen partiell in die Durchtrittsöffnungen am Gehäuseoberteil 59B ein, die dort umfangsseitig mit den Dichtungen 58 abgedichtet sind. Die Dichtungen 58 sind also beispielsweise zwischen den Befestigungsabschnitten 44 und dem Gehäuseoberteil 59B vorgesehen.

Am Gehäuseoberteil 59B ist ferner noch ein Dom 57 vorgesehen, der sich in den Schlitz oder die Aussparung 21 hinein erstreckt und die Sensorelemente 41, 42 schützend aufnimmt. Man könnte den Dom 57 auch als ein Schutzgehäuse oder als eine Schutzhaube für die Sensorelemente 41, 42 bezeichnen. Die Sensorelemente 41, 42 sind in dem Dom 57 relativ zueinander beweglich angeordnet.

Das Gehäuseoberteil 59B ist mit dem Gehäuseunterteil 59A beispielweise anhand mindestens einer Rastnase und/oder einer Verschraubung und/oder einer Verklebung verbunden.

Der Träger 47 ist beispielsweise an Stützen 57B des Gehäuseunterteils 59A abgestützt.

Insbesondere zur Auswertung der in Querrichtung wirkenden Kraft Py ist es vorteilhaft, wenn in oder neben einem jeweiligen Schlitz oder einer Aussparung 21, 121 in Längsrichtung der Aussparung 21, 121 oder quer zum Kraftfluss K mehrere Sensorelemente, beispielsweise kapazitive oder induktive Sensorelemente, angeordnet sind.

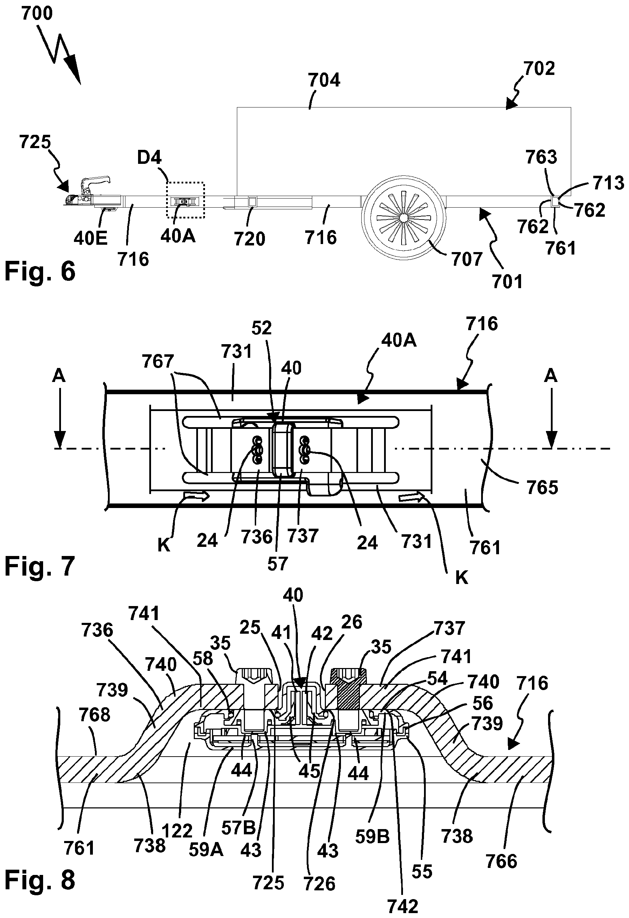

An einem in Figur 8, 11 zusätzlich dargestellten Ausführungsbeispiel wird weiterhin deutlich, dass auch innerhalb der Ausdehnungskavität 20, 120 befindliche Referenzflächen 125, 126 sowie 725, 726 frei vom Kraftfluss durch den Stützabschnitt 31 sind. Die Referenzflächen 725, 726 der Indikatorelemente 736, 737 sind beispielsweise an den Seitenflächen 742 vorgesehen. Die Sensorelemente 41, 42 bzw. die die Sensorelemente 41, 42 tragenden Trägerteile 43 sind mit diesen Referenzflächen 125, 126 oder 725, 726 verbunden, beispielsweise verklebt und/oder anhand der Verschraubung mit den Schrauben 35 durch die Durchtrittsöffnungen 24 hindurch. Somit bewegen sich die Sensorelemente 41, 42 synchron zu einer Bewegung der Referenzflächen 125, 126 oder 725, 726, so dass sie eine Relativbewegung der Referenzflächen 125, 126 erfassen können. An diesem Beispiel wird auch deutlich, dass die Referenzflächen 125, 126 oder 725, 726 nicht einander unmittelbar gegenüberliegend sein müssen, wie beispielsweise die Referenzflächen 25, 26, sondern beispielsweise auch nebeneinander angeordnet sein können.

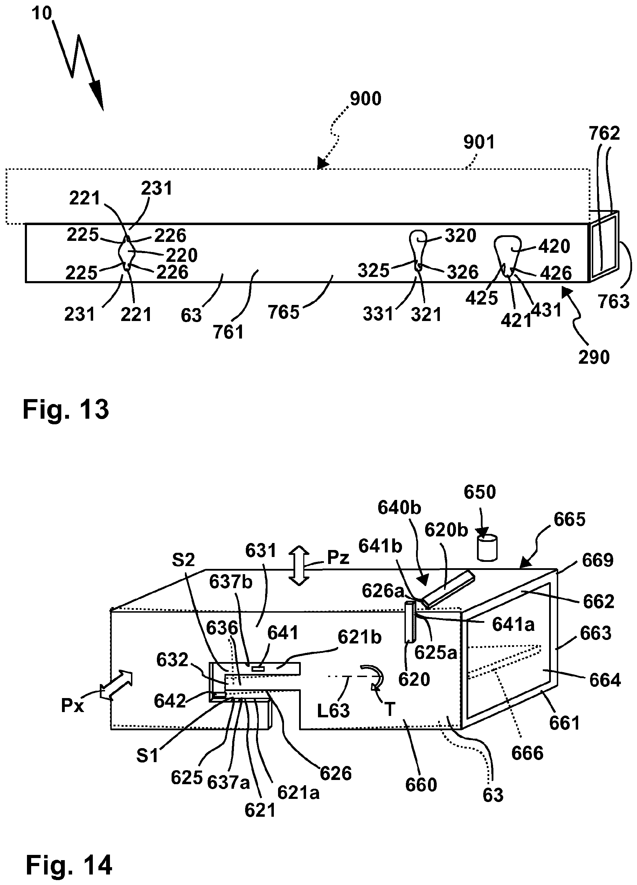

Ein schematisch zu verstehendes Ausführungsbeispiel ist in Figur 13 dargestellt. Beispielsweise sind an dem Querträger 290, der ein Tragelement 63 bildet, Aussparungen 221 vorgesehen, zwischen denen sich eine Ausdehnungskavität 220 befindet.

Der Querträger 290 kann beispielsweise als Tragelement für den Anhänger 700 oder für den Lastenträger 900 dienen.

Beispielsweise bildet der Querträger 290 eine Strebe, einen Träger 902 oder einen sonstigen Bestandteil des in Figur 13 schematisch dargestellten Tragegestells 901 des Lastenträgers 900.

Als Querträger 290 eignet sich beispielsweise der Profilkörper 665. An dessen Tragwand 661 ist die Aussparung 221 vorgesehen.

An einer jeweiligen Aussparung 221 vorbei verläuft ein Stützabschnitt 231 des Querträgers 90. Die Aussparungen 221 weisen jeweils einander gegenüberliegende Referenzflächen 225, 226 auf, denen in der Zeichnung nicht dargestellte Sensoren oder Sensorelemente, beispielsweise die Sensorelemente 41, 42, zugeordnet sind.

Am Querträger 290 ist exemplarisch auch noch eine schlüssellochartige Kontur vorgesehen, deren unterer Bereich eine Aussparung 321 bildet, die einander gegenüberliegende Referenzflächen 325, 326 aufweist. Dort können ebenfalls Sensorelemente in der Art der Sensorelemente 41, 42 vorgesehen sein. Der sozusagen breitere oder weitere Bereich dieses Schlüssellochs bildet eine Ausdehnungskavität 320. Bei einer Verformung eines sich neben der Aussparung 321 erstreckenden Stützabschnitts 331 wird die Aussparung 321 breiter oder enger, was die geeignete Sensorik, beispielsweise der Sensor 40a, 40b, entsprechend erfasst.

Eine im Wesentlichen dreieckförmige Aussparung ist weiter rechts am Querträger 290 exemplarisch dargestellt. Die dreieckförmige Aussparung weist einen schmaleren, unteren Bereich auf, der als Aussparung 421 mit Referenzflächen 425, 426 sozusagen die Messkavität darstellt. Der obere Bereich der Aussparung ist weiter oder breiter und bildet eine Ausdehnungskavität 420. Wenn sich ein Stützabschnitt 431 neben der Aussparung 421 verformt, ändert sich die Querbreite der Aussparung 421 und somit der Abstand zwischen den Referenzflächen 425, 426. Den Referenzflächen 425, 426 kann beispielsweise ein kapazitives, induktives oder dergleichen anderes zur Messung eines Abstands geeignetes Sensorelement, zum Beispiel in der Art des Sensors 40a, 40b, zugeordnet sein.

Nur am Rande sei erwähnt, dass bei allen vorgenannten Ausführungsbeispielen in der Zeichnung, aber auch bei einer sonstigen erfindungsgemäßen Anhängekupplung, der jeweilige Sensor oder die Auswerteeinrichtung drahtgebunden oder drahtlos oder beides mit beispielsweise einem Bordnetz des Kraftfahrzeugs kommunizieren kann. Vorzugsweise weist der Sensor diese Auswerteeinrichtungen dazu, beispielsweise einen Buskoppler, einen Leitungsanschluss, eine Funkschnittstelle oder dergleichen, auf.

Alternativ wäre es auch denkbar, dass beispielsweise die Arme 32, 33 oder die Indikatorelemente 736, 737 bei einer Belastung des Stützabschnitts 31, 731 eine Art Scherbewegung oder Schwenkbewegung machen. In der Zeichnung nicht dargestellt ist eine Variante, bei der beispielsweise die Referenzflächen voneinander weg schwenken oder zueinander hin schwenken.

Die erfindungsgemäß im Wesentlichen oder ganz von Kraftfluss freie Aussparung kann beispielsweise eine Art Zunge oder Zungenindikator umfassen. Dies ist auch im Ausführungsbeispiel gemäß Figur 14 angedeutet.

An einem Tragelement 63 (schematisch angedeutet) das beispielsweise ein L-Profil, ein im Querschnitt U-förmiges Profil oder ein Profilrohr mit insbesondere rundem oder rechteckigen Querschnitt sein kann, ist eine labyrinthartige Aussparung 621 vorgesehen. Das Tragelement 63 weist beispielsweise eine Tragwand 660 auf, an der die Aussparung 621 vorgesehen ist. Von der Tragwand 660 stehen Tragwände 661, 662 ab, die ihrerseits wiederum durch eine Tragwand 663 miteinander verbunden sind, die der Tragwand 660 gegenüberliegt. Somit ist ein einen Hohlraum 664 begrenzende, geschlossenes, im Querschnitt beispielsweise rechteckiges oder quadratisches Profil eines Profilkörpers 665 gebildet, der das Tragelement 63 darstellt.

In der Aussparung 621 mit Abschnitten 621a und 621b ist ein zungenartiges, in die Aussparung 621 vorstehendes Indikatorelement 636 vorgesehen. Das Indikatorelement 636 bildet oder umfasst beispielsweise einen Vorsprung 632. Bei einer Verformung des Tragelements 63 (in gestrichelten Linien angedeutet) bewegt sich das Indikatorelement 636 in der Aussparung 621 hin und her. Dadurch können beispielsweise Sensoren 641 und 642, die den Abschnitten 621b und 621a zugeordnet sind, unterschiedliche Abstände S1 und S2 zwischen dem Indikatorelement 636 und den benachbarten Wänden 637a, 637b der Aussparung 621 messen. Beispielsweise bilden Seitenflächen des Indikatorelements 636 und die zugeordnete Wand 637a oder 637b die Referenzflächen 625, 626, deren Relativabstand durch die Sensoren 641, 642 erfassbar ist. Die Aussparung 621 verläuft neben einem Stützabschnitt 631 des Tragelements 63. Man erkennt, dass die Sensoren 641, 642 nicht unmittelbar in den Abständen S1 oder S2 angeordnet sein müssen, wie beispielsweise beim Sensorelement oder Sensor 642 der Fall.

Der Profilkörper 665 könnte aber auch ein T-förmiger Profilkörper sein, so dass beispielsweise von der Tragwand 660 eine Tragwand 666 winkelig absteht. Dies soll zum Verständnis dazu dienen, dass zum Beispiel auch der Profilkörper 765 als U-förmiges oder L-förmiges oder T-förmiges Profil ausgestaltet sein kann. Bei einem U-förmigen Profil sind beispielsweise nur die Tragwände 761, 762, bei einem L-förmigen Profil zum Beispiel nur die Tragwand 761 und eine der Tragwände 762 vorhanden.

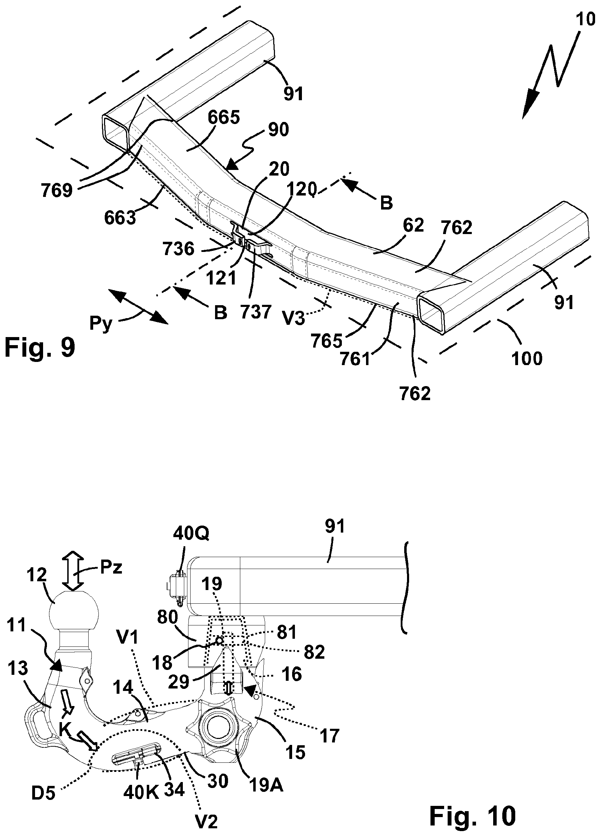

Die Tragwände 761-763 oder jedenfalls mindestens zwei aneinander angrenzende Tragwände können beispielsweise wie in Figur 9 gezeigt über Bogenabschnitte 769 miteinander verbunden sein. Mithin befinden sich also zwischen diesen Tragwänden gerundete Kantenbereich. Es ist aber auch möglich, dass eine sozusagen eckige Kante zwischen benachbarten Tragwänden 761-763 vorgesehen ist, wie in Figur 13 dargestellt. Beispielsweise sind die Tragwände 660-663 jeweils an einer Kante 669 miteinander unmittelbar verbunden. Die Kante 669 ist eine beispielsweise rechtwinkelige Kante.

Als Beispiel dafür, dass Indikatorelementen oder Indikatorvorsprünge auch an unterschiedlichen Tragwänden vorgesehen sein können, jedoch zusammenwirkende Referenzflächen aufweisen können, ist nachfolgend erläutert:
Beispielweise sind an den Tragwänden 660, 662 Indikatorelemente 620, 621 angeordnet. Die Indikatorelemente 620, 620b stehen beispielsweise zu der Kante 669 zwischen den Tragwänden 660, 662 vor oder erstrecken sich zu dieser Kante 669 hin, sodass an den Indikatorelementen 620,620b vorgesehene Referenzflächen 625 und 626 eine Relativbewegung zueinander machen, wenn der Profilkörper 665 verformt wird. Die Indikatorelemente 620, 620b sind oder umfassen beispielsweise stabförmig mit den Tragwänden 660, 662 verbundene Körper oder Zungen. Die Indikatorelemente können einstückig mit den Tragwänden 660, 662 sein, beispielsweise durch eine Herstellung als Gussbauteil, Strangpressteil oder dergleichen, aber auch an den Tragwänden 660, 662 dauerhaft fixiert sein, beispielsweise durch eine Verschweißung oder Verklebung.

Beispielsweise anhand kapazitiver Sensorflächen 641a und 641b eines Sensors 640b kann eine elektrische Kapazität an den Referenzflächen 625a und 626a erfasst werden, um auf diesem Wege ein Maß für die Belastung des Tragelements 63 zu ermitteln, beispielsweise bei einer Torsion T um eine Längsachse L63 des Tragelements 63 oder einer Belastung Pz oder Px quer zur Längsachse L63. Der Sensor 640b hat zur Auswertung der Kapazität an den Sensorflächen 641a und 641b beispielsweise eine schematisch dargestellte und mit den Sensorflächen 641a und 641b verbundene Auswerteeinrichtung 650. Die Auswerteeinrichtung 650 ist beispielsweise so oder ähnlich ausgestaltet wie die Auswerteeinrichtung 50. Der Abstand zwischen den Referenzflächen 625 und 626 könnte aber auch optisch oder magnetisch erfasst werden.

Die Referenzflächen 625a, 626a sind beispielsweise an Stirnseiten und/oder Längsseiten der Indikatorelemente 620, 620b vorgesehen.

## Patentansprüche

1. Tragelement als Bestandteil einer Kraftfahrzeug-Anhängekupplung oder eines zum Anhängen an eine Kraftfahrzeug-Anhängekupplung vorgesehenen Anhängers oder eines Lastenträgers, wobei das Tragelement (60-63) mindestens einen Sensor (40) zur Erfassung einer Verformung des Tragelements (60-63) durch eine an dem Tragelement (60-63) angreifende Last aufweist, wobei an dem Tragelement (60-63) mindestens eine Aussparung (21, 121) für den mindestens einen Sensor (40) im Bereich eines sich bei der Belastung durch die Last verformenden Stützabschnitts (31; 331; 731) des Tragelements (60-63) vorgesehen ist, wobei der mindestens eine Sensor (40) zur Messung eines Abstands von Referenzflächen (25, 26) der mindestens einen Aussparung (21, 121) vorgesehen ist, und wobei das Tragelement (60-63) als
ein Profilkörper (665, 765) mit mindestens zwei zueinander winkeligen oder über einen Bogenabschnitt (769) miteinander verbundenen Tragwänden (660, 761), die einen Zwischenraum oder Hohlraum (664, 764) einschließen, ausgestaltet ist, **dadurch gekennzeichnet, dass**
mindestens eine der Referenzflächen (25, 26) an einer Durchtrittsöffnung des Profilkörpers (665, 765) oder an einem vor den Profilkörper (665, 765) vorstehenden Indikatorelement (736, 737) vorgesehen ist und sich die Referenzflächen (25, 26) bei der Verformung des Tragelements (60-63) relativ zueinander, insbesondere aufeinander zu oder voneinander weg, bewegen.

2. Tragelement nach Anspruch 1, **dadurch gekennzeichnet, dass** die Referenzflächen (25, 26) insbesondere in einem Abstand neben dem Stützabschnitt (31; 331; 731) des Tragelements (60-63) angeordnet sind und/oder dass die Referenzflächen (25, 26) von einem Kraftfluss (K) durch den Stützabschnitt (31; 331; 731) des Tragelements (60-63) frei sind, der von dem Stützabschnitt (31; 331; 731) bei der Belastung durch die an dem Tragelement (60-63) angreifende Last übertragen wird.

3. Tragelement nach Anspruch 1 oder 2, **dadurch gekennzeichnet, dass** sich mindestens eine der Referenzflächen (25, 26) oder die Referenzflächen (25, 26) quer zu einem sich bei der Belastung durch die Last verformenden Stützabschnitt (31; 331; 731) des Tragelements (60-63) erstreckt oder erstrecken und/oder dass sich die Referenzflächen (25, 26) längs oder quer zu einer Richtung eines Kraftflusses (K) durch den Stützabschnitt (31; 331; 731) erstrecken und/oder dass die Aussparung (21, 121) eine Dehnungsfuge bildet oder umfasst und/oder dass mindestens eine der Referenzflächen (625, 626) an einem zungenartigen oder armartigen Indikatorelement (736, 737) oder einem Vorsprung vorgesehen ist.

4. Tragelement nach einem der vorhergehenden Ansprüche, **dadurch gekennzeichnet, dass** die mindestens eine Aussparung (21, 121) an mindestens einem vor einen Grundkörper des Tragelements (60-63) vorstehenden Vorsprung oder Indikatorelement (736, 737) vorgesehen ist und/oder die mindestens eine Aussparung (21, 121) eine sich von einer Öffnung an einer Außenoberfläche des Tragelements (60-63) weg erstreckende Vertiefung umfasst, wobei die Referenzflächen (25, 26) zweckmäßigerweise zur Öffnung winkelig, insbesondere orthogonal, sind, und/oder dass die mindestens eine Aussparung (21, 121) schlitzförmig ist, insbesondere eine Querbreite von weniger als 5 mm, bevorzugt weniger als 3 mm aufweist, und/oder sich über eine gesamte Querbreite des Tragelements (60-63) oder im Wesentlichen über eine gesamte Querbreite des Tragelements (60-63) erstreckt.

5. Tragelement nach einem der vorhergehenden Ansprüche, **dadurch gekennzeichnet, dass** zwischen dem Stützabschnitt (31; 331; 731) und den Referenzflächen (25, 26) eine Ausdehnungskavität (20) angeordnet ist, deren Querbreite in einer Richtung parallel zu dem Abstand zwischen den Referenzflächen (25, 26) größer als der Abstand zwischen den Referenzflächen (25, 26) ist und/oder dass an entgegengesetzten Seiten des Stützabschnitts (31; 331; 731) jeweils eine Aussparung (21, 121) angeordnet ist und/oder dass die Aussparung eine neben den Referenzflächen angeordnete verbreiterte Zone oder einen neben den Referenzflächen angeordneten verbreiterten Nutboden aufweist, wobei vorteilhaft vorgesehen ist, dass die mindestens eine Aussparung (21, 121) und die Ausdehnungskavität (20) eine insgesamt T-förmige oder ovale oder eiförmige oder schlüssellochförmige Gestalt aufweisen.

6. Tragelement nach einem der vorhergehenden Ansprüche, **dadurch gekennzeichnet, dass** die mindestens eine Aussparung (21, 121) mit einer Sensoraufnahme (22, 122) kommuniziert, in welcher eine Komponente des mindestens einen Sensors (40), insbesondere eine Auswerteeinrichtung zur Auswertung mindestens eines Signals des mindestens einen Sensors (40), angeordnet oder anordenbar ist, und/oder dass die Sensoraufnahme (22, 122) von der oder einer Ausdehnungskavität (20) gebildet ist oder die Ausdehnungskavität (20) bildet und/oder dass die Sensoraufnahme (22, 122) mit mindestens einer Durchtrittsöffnung (24) kommuniziert, durch die ein Befestigungselement, insbesondere eine Schraube, zur Verbindung mit der in der Sensoraufnahme (22, 122) angeordneten Komponente des mindestens einen Sensors (40) durchsteckbar ist.

7. Tragelement nach einem der vorhergehenden Ansprüche, **dadurch gekennzeichnet, dass** an dem Tragelement (60-63) mindestens zwei bezüglich einer Richtung eines Kraftflusses (K) durch den Stützabschnitt (31; 331; 731) hintereinander angeordnete Aussparungen (21, 121) vorgesehen sind und/oder mindestens eine Aussparung (21, 121) an einem Krümmungsabschnitt (115) oder einem im Wesentlichen geradlinig verlaufenden Abschnitt (14, 114) des Tragelements (60-63) angeordnet ist und/oder dass das Tragelement (60-63), insbesondere der Kupplungsarm (11), mindestens eine Montageöffnung (34) aufweist, die an einer zu den Referenzflächen (25, 26) winkeligen Querseite des Tragelements (60-63) vorgesehen ist.

8. Tragelement nach einem der vorhergehenden Ansprüche, **dadurch gekennzeichnet, dass** ein insbesondere kapazitives oder induktives oder optisches Sensorelement (41, 42) des mindestens einen Sensors (40) mit mindestens einer Referenzfläche (25, 26) fest verbunden ist und/oder zwei einander zugeordneten Referenzflächen (25, 26) jeweils ein Sensorelement (41, 42) zugeordnet ist, wobei die Sensorelemente (41, 42) einen Abstand zueinander aufweisen und relativ zueinander beweglich sind, und/oder dass mindestens ein Sensorelement (41, 42) des mindestens einen Sensors (40) an einem Halteabschnitt (45) eines Trägerteils (43) angeordnet ist, das einen sich neben dem Halteabschnitt (45) erstreckenden, insbesondere zu dem Halteabschnitt (45) winkeligen, Befestigungsabschnitt (43) aufweist, der mit einem Befestigungsbereich des Tragelements (60-63) neben der Referenzfläche (25, 26) verbunden ist.

9. Tragelement nach einem der vorhergehenden Ansprüche, **dadurch gekennzeichnet, dass** das Trägerteil (43) eine L-förmige Gestalt aufweist und/oder der Halteabschnitt (45) und der Befestigungsabschnitt (43) von zueinander winkeligen Schenkeln des Trägerteils (43) gebildet sind und/oder dass an mindestens einer Referenzfläche (25, 26) der mindestens einen Aussparung (21, 121) mindestens zwei Sensorelemente (41, 42) oder Sensoren (40), insbesondere in einer ersten Reihenrichtung oder mindestens zwei zueinander winkeligen Reihenrichtungen, nebeneinander angeordnet sind.

10. Tragelement nach einem der vorhergehenden Ansprüche, **dadurch gekennzeichnet, dass** der mindestens eine Sensor (40) ein kapazitives Sensorelement (41, 42) und/oder ein induktives Sensorelement (41, 42) und/oder einen Dehnungsmessstreifen und/oder einen Abstandsensor und/oder ein optisches Sensorelement (41, 42) und/oder ein Piezoelement und/oder ein Sensorgehäuse aufweist, in welchem mindestens ein Sensorelement (41, 42), insbesondere ein Dehnungsmessstreifen oder eine kapazitive Messfläche, vor Umwelteinflüssen geschützt angeordnet sind, und/oder dass es mindestens eine Auswerteeinrichtung (50) zur Auswertung mindestens eines Sensorsignals des mindestens einen Sensors (40) aufweist.

11. Tragelement nach einem der vorhergehenden Ansprüche, **dadurch gekennzeichnet, dass** es ausschließlich ein Bestandteil eines Anhängers oder eines Lastenträgers bildet oder dass das Tragelement keinen Bestandteil der Kraftfahrzeug-Anhängekupplung bildet, insbesondere nicht an einem Kupplungsarm (11) angeordnet ist, und/oder dass die Tragwände (660, 761) zueinander rechtwinkelig sind und/oder der Profilkörper (665, 765) einen L-förmigen, T-förmigen, U-förmigen oder quadratischen oder rechteckigen Querschnitt aufweist und/oder zumindest abschnittsweise im Querschnitt Rundungen aufweist oder als ein Rundprofil und/oder als ein im Querschnitt geschlossenes Profil ausgestaltet ist.

12. Tragelement nach einem der vorhergehenden Ansprüche, **dadurch gekennzeichnet, dass** das Indikatorelement (736, 737) einstückig mit mindestens einer Tragwand (761) des Profilkörpers (665, 765) ist und/oder als ein Stanz-Teil oder Stanz-Biegeteil aus einem Wandkörper (766) der Tragwand (761) hergestellt ist und/oder in der Art einer Zunge vor die Tragwand (761) vorsteht und/oder dass an der Tragwand (761) zwei Indikatorelemente (736, 737) vorgesehen sind, an denen die Referenzflächen (25, 26; 725, 726) vorgesehen sind, wobei die Referenzflächen einander zweckmäßigerweise gegenüberliegen.

13. Lastenträger, insbesondere Hecklastenträger, zum Auflegen einer Last und zur Befestigung an einem Kraftfahrzeug, insbesondere an einer Anhängekupplung eines Kraftfahrzeugs, mit einem Tragelement nach einem der vorhergehenden Ansprüche.

14. Anhängekupplung für ein Kraftfahrzeug zum Anhängen eines Anhängers oder Befestigen eines Lastenträgers mit einem insbesondere einen Bestandteil eines Querträgers (90) oder eines Kupplungsarms (511) bildenden Tragelement nach einem der Ansprüche 1 bis 12.

15. Anhänger zum Anhängen an ein Kraftfahrzeug mit einem insbesondere an einem Fahrgestell des Anhängers angeordneten oder vorgesehenen Tragelement nach einem der Ansprüche 1 bis 12.

## Claims

1. Support element as part of a motor vehicle trailer coupling or a trailer or a load carrier for attaching to a motor vehicle trailer coupling, wherein the support element (60-63) has at least one sensor (40) for detecting a deformation of the support element (60-63) of the trailer coupling (10) due to a load acting on the support element (60-63), wherein there is provided on the support element (60-63) at least one recess (21, 121) for the sensor or sensors (40) in the area of a support section (31; 331; 731) of the support element (60-63) which deforms under the loading of a load, wherein the sensor or sensors (40) is or are provided for measuring a distance between reference surfaces (25, 26) of the recess or recesses (21, 121), and wherein the support element (60-63) is in the form of a profile body (665, 765) with at least two bearing walls (660, 761) at an angle to one another or joined together via a curved section (769), which enclose an intermediate space or hollow space (664, 764), **characterised in that** at least one of the reference surfaces (25, 26) is provided at a through opening of the profile body (665, 765) or on an indicator element (736, 737) protruding from the profile body (665, 765) and that the reference surfaces (25, 26), during deformation of the support element (60-63), move relative to one another, in particular towards or away from one another.

2. Support element according to claim 1, **characterised in that** the reference surfaces (25, 26) are arranged in particular with clearance next to the support section (31; 331; 731) of the support element (60-63) and/or that the reference surfaces (25, 26) are free from a force flow (K) through the support section (31; 331; 731) of the support element (60-63) which is transferred by the support section (31; 331; 731) during loading by the load acting on the support element (60-63).

3. Support element according to claim 1 or 2, **characterised in that** at least one of the reference surfaces (25, 26) or the reference surfaces (25, 26) extends or extend transversely to a support section (31; 331; 731) of the support element (60-63) which deforms under loading by the load, and/or that the reference surfaces (25, 26) extend along or transversely to a direction of a force flow (K) through the support section (31; 331; 731), and/or that the recess (21, 121) forms or comprises an expansion joint, and/or that at least one of the reference surfaces (625, 626) is provided on a tongue-like or arm-like indicator element (736, 737) or a projection.

4. Support element according to any of the preceding claims, **characterised in that** the recess or recesses (21, 121) is or are provided on at least one projection or indicator element (736, 737) protruding from a base body of the support element (60-63), and/or the recess or recesses (21, 121) comprises or comprise a recess extending away from an opening at an outer surface of the support element (60-63), wherein the reference surfaces (25, 26) are expediently at an angle to the opening, in particular orthogonal, and/or that the recess or recesses (21, 121) is or are slot-like, in particular with a transverse width of less than 5 mm, preferably less than 3 mm, and/or extends or extend over a whole transverse width of the support element (60-63) or substantially over a whole transverse width of the support element (60-63).

5. Support element according to any of the preceding claims, **characterised in that** there is provided between the support section (31; 331; 731) and the reference surfaces (25, 26) an expansion cavity (20) with a transverse width in a direction parallel to the distance between the reference surfaces (25, 26) which is greater than the distance between the reference surfaces (25, 26), and/or that there is provided on each opposite side of the support section (31; 331; 731) a recess (21, 121), and/or that the recess has a widened zone or a widened slot base next to the reference surfaces, wherein it is advantageously provided that the recess or recesses (21, 121) and the expansion cavity (20) have an altogether T-shaped or oval or egg-shaped or keyhole-like shape.

6. Support element according to any of the preceding claims, **characterised in that** the recess or recesses (21, 121) communicates or communicate with a sensor holder (22, 122), in which a component of the sensor or sensors (40), in particular an evaluation device for the evaluation of at least one signal of the sensor or sensors (40), is or may be mounted, and/or that the sensor holder (22, 122) is formed by the expansion cavity (20) or one of the expansion cavities (20) or forms the expansion cavity (20), and/or that the sensor holder (22, 122) communicates with at least one through hole (24) through which a mounting element, in particular a screw, for connection with the component of the sensor or sensors (40) located in the sensor holder (22, 122), may be inserted.

7. Support element according to any of the preceding claims, **characterised in that** there are provided on the support element (60-63) at least two recesses (21, 121) arranged one behind the other with respect to a direction of a force flow (K) through the support section (31; 331; 731), and/or at least one recess (21, 121) is provided on a curved section (115) or a section (14, 114) of the support element (60-63) running substantially in a straight line, and/or that the support element (60-63), in particular the coupling arm (11), has at least one mounting hole (34), which is provided on a transverse side of the support element (60-63) at an angle to the reference surfaces (25, 26).

8. Support element according to any of the preceding claims, **characterised in that** a sensor element (41, 42), in particular capacitive or inductive or optical, of the sensor or sensors (40) is firmly connected to at least one reference surface (25, 26), and/or a sensor element (41, 42) is assigned to each of two reference surfaces (25, 26) assigned to one another, wherein the sensor elements (41, 42) have clearance between them and are movable relative to one another, and/or that at least one sensor element (41, 42) of the sensor or sensors (40) is mounted on a holding section (45) of a support member (43) which has a mounting section (43) extending next to the holding section (45), in particular at an angle to the holding section (45), and which is connected to a mounting area of the support element (60-63) next to the reference surface (25, 26).

9. Support element according to any of the preceding claims, **characterised in that** the support member (43) has an L-shape and/or the holding section (45) and the mounting section (43) are formed by arms of the support member (43) at an angle to one another, and/or that, on at least one reference surface (25, 26) of the recess or recesses (21, 121), at least two sensor elements (41, 42) or sensors (40) are arranged next to one another, in particular in a first row direction or at least two row directions at an angle to one another.

10. Support element according to any of the preceding claims, **characterised in that** the sensor or sensors (40) has or have a capacitive sensor element (41, 42) and/or an inductive sensor element (41, 42) and/or a strain gauge and/or a distance sensor and/or an optical sensor element (41, 42) and/or a piezo element and/or a sensor housing, in which at least one sensor element (41, 42), in particular a strain gauge or a capacitive measuring surface are protected from environmental effects, and/or it or they has or have at least one evaluation device (50) for the evaluation of at least one sensor signal of the sensor or sensors (40).

11. Support element according to any of the preceding claims, **characterised in that** it forms solely a part of a trailer or load carrier or that the support element forms no part of the motor vehicle trailer coupling, in particular is not mounted on a coupling arm (11), and/or that the bearing walls (660, 761) are at a right-angle to one another, and/or the profile body (665, 765) has an L-shaped, T-shaped, U-shaped or square or rectangular cross-section and/or has roundings in cross-section at least in part or is designed as a profile with a closed cross-section.

12. Support element according to any of the preceding claims, **characterised in that** the indicator element (736, 737) is formed integrally with at least one bearing wall (761) of the profile body (665, 765) and/or is produced as a punched part or punched-bent part from a wall body (766) of the bearing wall (761) and/or protrudes from the bearing wall (761) in the manner of a tongue and/or that the bearing wall (761) is provided with two indicator elements (736, 737), on which the reference surfaces (25, 26; 725, 726) are provided, wherein the reference surfaces expediently lie opposite one another.

13. Load carrier, in particular rear load carrier, for the placing of a load and for attaching to a motor vehicle, in particular to a trailer coupling of a motor vehicle, with a support element according to any of the preceding claims.

14. Trailer coupling for a motor vehicle for attaching a trailer or attaching a load carrier, with a support element according to any of claims 1 to 12, in particular forming a part of a crossmember (90) or a coupling arm (511).

15. Trailer for attaching to a motor vehicle with a support element according to any of claims 1 to 12, in particular mounted or provided on a chassis of the trailer.

## Revendications

1. Elément porteur en tant que partie constitutive d'un attelage de remorque de véhicule automobile ou d'une remorque prévue pour être attachée à un attelage de remorque de véhicule automobile ou d'un support de charges, dans lequel l'élément porteur (60-63) présente au moins un capteur (40) pour détecter une déformation de l'élément porteur (60-63) par une charge s'engageant sur l'élément porteur (60-63), dans lequel est prévu, sur l'élément porteur (60-63), au moins un évidement (21, 121) pour l'au moins un capteur (40) dans la zone d'une section d'appui (31 ; 331 ; 731), se déformant lors de la contrainte exercée par la charge, de l'élément porteur (60-63), dans lequel l'au moins un capteur (40) est prévu pour mesurer un espacement entre des surfaces de référence (25, 26) de l'au moins un évidement (21, 121), et dans lequel l'élément porteur (60-63) est configuré comme un corps profilé (665, 765) avec au moins deux parois porteuses (660, 761) angulaires l'une par rapport à l'autre ou reliées entre elles par l'intermédiaire d'une section cintrée (769), qui forment un espace intermédiaire ou un espace creux (664, 764),
**caractérisé en ce que**
au moins une des surfaces de référence (25, 26) est prévue sur une ouverture de passage du corps profilé (665, 765) ou sur un élément indicateur (736, 737) faisant saillie devant le corps profilé (665, 765) et les surfaces de référence (25, 26) se déplacent, lors de la déformation de l'élément porteur (60-63), les unes par rapport aux autres, en particulier les unes vers les autres ou de manière à s'éloigner les unes des autres.

2. Elément porteur selon la revendication 1, **caractérisé en ce que** les surfaces de référence (25, 26) sont disposées en particulier selon un espacement à côté de la section d'appui (31 ; 331 ; 731) de l'élément porteur (60-63) et/ou que les surfaces de référence (25, 26) sont dépourvues d'un flux de force (K) à travers la section d'appui (31 ; 331 ; 731) de l'élément porteur (60-63), qui est transmis par la section d'appui (31 ; 331 ; 731) lors de la contrainte exercée par la charge s'engageant sur l'élément porteur (60-63).

3. Elément porteur selon la revendication 1 ou 2, **caractérisé en ce qu'**au moins une des surfaces de référence (25, 26) ou les surfaces de référence (25, 26) s'étend ou s'étendent de manière transversale par rapport à une section d'appui (31 ; 331 ; 731), se déformant lors de la contrainte exercée par la charge, de l'élément porteur (60-63), et/ou que les surfaces de référence (25, 26) s'étendent de manière longitudinale ou de manière transversale par rapport à une direction d'un flux de force (K) à travers la section d'appui (31 ; 331 ; 731), et/ou que l'évidement (21, 121) forme ou comprend un joint de dilatation, et/ou qu'au moins une des surfaces de référence (625, 626) est prévue sur un élément indicateur (736, 737) de type languette ou de type bras ou sur une partie faisant saillie.

4. Elément porteur selon l'une quelconque des revendications précédentes, **caractérisé en ce que** l'au moins un évidement (21, 121) est prévu sur au moins une partie faisant saillie ou un élément indicateur (736, 737) faisant saillie devant un corps de base de l'élément porteur (60-63), et/ou l'au moins un évidement (21, 121) comprend un renfoncement s'étendant de manière à s'éloigner d'une ouverture sur une surface extérieure de l'élément porteur (60-63), dans lequel les surfaces de référence (25, 26) sont de manière appropriée angulaires, en particulier orthogonales, par rapport à l'ouverture, et/ou que l'au moins un évidement (21, 121) est en forme d'entaille, en particulier présente une largeur transversale inférieure à 5 mm, de manière préférée inférieure à 3 mm et/ou s'étend sur une largeur transversale totale de l'élément porteur (60-63) ou sensiblement sur une largeur transversale totale de l'élément porteur (60-63).

5. Elément porteur selon l'une quelconque des revendications précédentes, **caractérisé en ce qu'**est disposée entre la section d'appui (31 ; 331 ; 731) et les surfaces de référence (25, 26), une cavité d'expansion (20), dont la largeur transversale dans une direction de manière parallèle par rapport à l'espacement entre les surfaces de référence (25, 26) est plus grande que l'espacement entre les surfaces de référence (25, 26), et/ou que respectivement un évidement (21, 121) est disposé sur des côtés opposés de la section d'appui (31 ; 331 ; 731), et/ou que l'évidement présente une zone élargie disposée à côté des surfaces de référence ou un fond de rainure élargi disposé à côté des surfaces de référence, dans lequel il est prévu de manière avantageuse que l'au moins un évidement (21, 121) et la cavité d'expansion (20) présentent une configuration globalement en forme de T ou ovale ou en forme d'œuf ou en forme de trou de serrure.

6. Elément porteur selon l'une quelconque des revendications précédentes, **caractérisé en ce que** l'au moins un évidement (21, 121) communique avec un logement de capteur (22, 122), dans lequel est disposé ou peut être disposé un composant de l'au moins un capteur (40), en particulier un dispositif d'évaluation pour évaluer au moins un signal de l'au moins un capteur (40), et/ou que le logement de capteur (22, 122) est formé par la ou une cavité d'expansion (20) ou forme la cavité d'expansion (20), et/ou que le logement de capteur (22, 122) communique avec au moins une ouverture de passage (24), par laquelle un élément de fixation, en particulier une vis, peut être enfiché de part en part pour être relié au composant, disposé dans le logement de capteur (22, 122), de l'au moins un capteur (40).

7. Elément porteur selon l'une quelconque des revendications précédentes, **caractérisé en ce que** sont prévus sur l'élément porteur (60-63) au moins deux évidements (21, 121) disposés l'un après l'autre par rapport à une direction d'un flux de force (K) à travers la section d'appui (31 ; 331 ; 731), et/ou au moins un évidement (21, 121) est disposé sur une section incurvée (115) ou une section (14, 114) s'étendant sensiblement de manière rectiligne de l'élément porteur (60-63), et/ou que l'élément porteur (60-63), en particulier le bras d'attelage (11), présente au moins une ouverture de montage (34), qui est prévue sur un côté transversal, angulaire par rapport aux surfaces de référence (25, 26), de l'élément porteur (60-63).

8. Elément porteur selon l'une quelconque des revendications précédentes, **caractérisé en ce qu'**un élément de capteur (41, 42) en particulier capacitif ou inductif ou optique de l'au moins un capteur (40) est relié de manière solidaire à au moins une surface de référence (25, 26) et/ou respectivement un élément de capteur (41, 42) est associé aux deux surfaces de référence (25, 26) associées l'une à l'autre, dans lequel les éléments de capteur (41, 42) présentent un espacement les uns par rapport aux autres et sont mobiles les uns par rapport aux autres, et/ou qu'au moins un élément de capteur (41, 42) de l'au moins un capteur (40) est disposé sur une section de maintien (45) d'une partie de support (43), qui présente une section de fixation (43) s'étendant à côté de la section de maintien (45), en particulier angulaire par rapport à la section de maintien (45), qui est reliée à une zone de fixation de l'élément porteur (60-63) à côté de la surface de référence (25, 26).

9. Elément porteur selon l'une quelconque des revendications précédentes, **caractérisé en ce que** la partie de support (43) présente une configuration en forme de L et/ou la section de maintien (45) et la section de fixation (43) sont formées par des branches angulaires les unes par rapport aux autres de la partie de support (43), et/ou qu'au moins deux éléments de capteur (41, 42) ou capteurs (40) sont disposés côte à côte dans une première direction d'alignement ou au moins dans deux directions d'alignement angulaires l'une par rapport à l'autre sur au moins une surface de référence (25, 26) de l'au moins un évidement (21, 121).

10. Elément porteur selon l'une quelconque des revendications précédentes, **caractérisé en ce que** l'au moins un capteur (40) présente un élément de capteur (41, 42) capacitif et/ou un élément de capteur (41, 42) inductif et/ou une jauge de contrainte et/ou un capteur d'espacement et/ou un élément de capteur (41, 42) optique et/ou un élément piézoélectrique et/ou un boîtier de capteur, dans lequel au moins un élément de capteur (41, 42), en particulier une jauge de contrainte ou une surface de mesure capacitive, sont disposés de manière protégée contre les influences extérieures, et/ou qu'il présente au moins un dispositif d'évaluation (50) pour évaluer au moins un signal de capteur de l'au moins un capteur (40).

11. Elément porteur selon l'une quelconque des revendications précédentes, **caractérisé en ce qu'**il forme exclusivement une partie constitutive d'une remorque ou d'un support de charges, ou que l'élément porteur ne forme aucune partie constitutive de l'attelage de remorque de véhicule automobile, en particulier n'est pas disposé sur un bras d'attelage (11), et/ou que les parois porteuses (660, 761) sont à angle droit les unes par rapport aux autres et/ou le corps profilé (665, 765) présente une section transversale en forme de L, en forme de T, en forme de U ou carrée ou rectangulaire et/ou présente au moins par endroits des arrondis dans la section transversale et/ou est configuré en tant qu'un profil rond et/ou en tant qu'un profil fermé dans la section transversale.

12. Elément porteur selon l'une quelconque des revendications précédentes, **caractérisé en ce que** l'élément indicateur (736, 737) est d'un seul tenant avec au moins une paroi porteuse (761) du corps profilé (665, 765) et/ou est fabriqué en tant qu'une pièce estampée ou une pièce cintrée estampée à partir d'un corps de paroi (766) de la paroi porteuse (761) et/ou fait saillie à la manière d'une languette devant la paroi porteuse (761), et/ou que sont prévus sur la paroi porteuse (761) deux éléments indicateurs (736, 737), sur lesquels les surfaces de référence (25, 26 ; 725, 726) sont prévues, dans lequel les surfaces de référence se font face les unes les autres de manière appropriée.

13. Support de charges, en particulier support de charges arrière, pour déposer une charge et pour être fixé sur un véhicule automobile, en particulier sur un attelage de remorque d'un véhicule automobile, avec un élément porteur selon l'une quelconque des revendications précédentes.

14. Attelage de remorque pour un véhicule automobile pour attacher une remorque ou fixer un support de charges avec un élément porteur selon l'une quelconque des revendications 1 à 12 formant en particulier une partie constitutive d'une traverse (90) ou d'un bras d'attelage (511).

15. Remorque destinée à être attachée à un véhicule automobile avec un élément porteur selon l'une quelconque des revendications 1 à 12 disposé ou prévu en particulier sur un châssis de la remorque.
